# EUROPEAN PATENT APPLICATION

(11) **EP 4 759 697 A1**
(43) Date of publication of application: **17.06.2026**
(21) Application number: 24943901.9
(22) Date of filing: 27.06.2024
(51) Int. Cl.: B62M 6/45

(54) **CONTROL METHOD FOR ELECTRICALLY ASSISTED BICYCLE, AND ASSIST ASSEMBLY AND ELECTRICALLY ASSISTED BICYCLE**

(71) Applicant: SZ DJI Technology Co., Ltd., 518000 Shenzhen (CN)
(72) Inventor: QIU, Zhenping, Shenzhen, Guangdong 518057 (CN); LONG, Biao, Shenzhen, Guangdong 518057 (CN); YANG, Tianhao, Shenzhen, Guangdong 518057 (CN); HU, Zhijiang, Shenzhen, Guangdong 518057 (CN); BIN, Peng, Shenzhen, Guangdong 518057 (CN)
(74) Representative: Appelt, Christian W.
(86) International application number: PCT/CN2024/102049
(87) International publication number: WO 2026/000303

(57) **Abstract**

A control method for an assisted bicycle is provided, the assisted bicycle is equipped with an assistance assembly, and the assistance assembly is configured to output an assistance torque in response to power applied to the assisted bicycle from the outside. The method includes: obtaining power information applied to the assisted bicycle from the outside (110); determining a response speed of the assistance assembly based on the power information (120); and adjusting information related to the assistance torque output by the assistance assembly based on the response speed (130). The assistance assembly is controlled by adjusting a corresponding response speed according to the power information, so that the assistance assembly outputs the assistance torque at a more appropriate timing, thereby improving the intelligence level of the assistance and the user experience. The present application also provides an assistance assembly and an assisted bicycle.

## Description

### Technical Field

The present application relates to the technical field of assisted bicycles, and more particularly, to a control method for an assisted bicycle, an assistance assembly, and an assisted bicycle.

### Background Art

Assisted bicycles, such as electric assisted bicycles (E-bikes), can have torque provided by an assistance unit. The torque provided by the assistance unit is superimposed with the rider's pedaling force and output to the chainring to drive the rotation of the wheels, thereby achieving an assistance amplification effect and saving the user's physical effort.

In the related art, the intelligence level of assisted bicycles is relatively low, and there is room for improvement in the user experience.

### Summary of the Invention

The main purpose of the present application is to provide a control method for an assisted bicycle, an assistance assembly, and an assisted bicycle, aiming to improve the intelligence level and user experience of the assisted bicycle.

In a first aspect, the present application provides a control method for an assisted bicycle, the assisted bicycle being provided with an assistance assembly, the assistance assembly being configured to output an assistance torque in response to a power applied from outside to the assisted bicycle, the method includes:
obtaining power information applied to the assisted bicycle from the outside;
determining a response speed of the assistance assembly based on the power information; and
adjusting relevant information of the assistance torque output by the assistance assembly based on the response speed.

In a second aspect, the present application provides a control method for an assisted bicycle, the assisted bicycle being provided with an assistance assembly, the method includes:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
after the assisted bicycle maintains balance, in response to a user operation, controlling the assistance assembly to continuously output an assistance torque within a preset time period, the user operation including the user pedaling the pedals of the assisted bicycle or triggering the push-bike mode of the assisted bicycle.

In a third aspect, the present application further provides a control method for an assisted bicycle, the assisted bicycle includes an assistance assembly, a pedal assembly, a transmission assembly, and a wheel, the assistance assembly and the pedal assembly being connected to the wheel via the transmission assembly, the transmission assembly including a first transmission member and a second transmission member in cooperation with the first transmission member, a transmission backlash existing between the first transmission member and the second transmission member, the method further including:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

In a fourth aspect, the present application further provides an assistance assembly of an assisted bicycle, the assistance assembly includes an assistance motor, one or more processors, and one or more memories storing computer program codes, where the one or more processors and the one or more memories storing computer program codes are configured to cooperate such that the assistance assembly performs the following steps:
obtaining power information applied to the assisted bicycle from outside;
determining a response speed of the assistance assembly based on the power information; and
adjusting relevant information of the assistance torque output by the assistance assembly based on the response speed.

In a fifth aspect, the present application further provides an assistance assembly of an assisted bicycle, the assistance assembly includes an assistance motor, one or more processors, and one or more memories storing computer program codes, where the one or more processors and the one or more memories storing computer program codes are configured to cooperate such that the assistance assembly performs the following steps:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
after the assisted bicycle maintains balance, in response to a user operation, controlling the assistance assembly to continuously output an assistance torque within a preset time period, the user operation including the user pedaling the pedals of the assisted bicycle or triggering the push-bike mode of the assisted bicycle.

In a sixth aspect, the present application further provides an assistance assembly of an assisted bicycle, the assistance assembly includes an assistance motor, one or more processors, and one or more memories storing computer program codes, where the one or more processors and the one or more memories storing computer program codes are configured to cooperate such that the assistance assembly performs the following steps:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

In a seventh aspect, the present application further provides an assisted bicycle, the assisted bicycle includes an assistance assembly, a pedal assembly, a transmission assembly, and a wheel(s), both the assistance assembly and the pedal assembly are connected to the wheel(s) via the transmission assembly;
the assisted bicycle further includes one or more processors and one or more memories storing computer program codes, where the one or more processors and the one or more memories storing computer program codes are configured to cooperate so that the assisted bicycle performs the following steps:
obtaining power information applied to the assisted bicycle from outside;
determining a response speed of the assistance assembly based on the power information; and
adjusting relevant information of the assistance torque output by the assistance assembly based on the response speed.
In an eighth aspect, the present application further provides an assisted bicycle, the assisted bicycle includes an assistance assembly, a pedal assembly, a transmission assembly, and a wheel(s), both the assistance assembly and the pedal assembly are connected to the wheel(s) via the transmission assembly;
the assisted bicycle further includes one or more processors and one or more memories storing computer program codes, where the one or more processors and the one or more memories storing computer program codes are configured to cooperate so that the assisted bicycle performs the following steps:
   in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
   after the assisted bicycle maintains balance, in response to a user operation, controlling the assistance assembly to continuously output an assistance torque within a preset time period, the user operation including the user pedaling the pedals of the assisted bicycle or triggering the push-bike mode of the assisted bicycle.

In a ninth aspect, the present application further provides an assisted bicycle, the assisted bicycle includes an assistance assembly, a pedal assembly, a transmission assembly, and a wheel(s), both the assistance assembly and the pedal assembly are connected to the wheel(s) via the transmission assembly;
the assisted bicycle further includes one or more processors and one or more memories storing computer program codes, where the one or more processors and the one or more memories storing computer program codes are configured to cooperate so that the assisted bicycle performs the following steps:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

### Brief Description of the Drawings

In order to more clearly describe the technical solutions of some embodiments of the present application, the drawings used in the description of the embodiments are briefly introduced below. It is apparent that the drawings described below illustrate some embodiments of the present application, and for a person skilled in the art, other drawings can be obtained based on these drawings without any inventive effort.
FIG. 1 is a schematic flow diagram of a control method for an assisted bicycle provided in some embodiments of the present application;
FIG. 2 is a schematic diagram of determining the assistance torque in one embodiment of the present application;
FIG. 3 is a schematic diagram of determining the assistance ratio in one embodiment of the present application;
FIG. 4 is a schematic diagram of determining a target gear ratio and/or gear in one embodiment of the present application;
FIG. 5 is a schematic diagram of reducing or eliminating transmission backlash in one embodiment of the present application;
FIG. 6 is a schematic diagram of an off-start mode in one embodiment of the present application;
FIG. 7 is a schematic diagram of a push-bike mode in one embodiment of the present application;
FIG. 8 is a schematic flow diagram of a control method for an assisted bicycle provided in another embodiment of the present application;
FIG. 9 is a schematic flow diagram of a control method for an assisted bicycle provided in yet another embodiment of the present application;
FIG. 10 is a schematic block diagram of an assistance assembly provided in an embodiment of the present application; and
FIG. 11 is a schematic block diagram of an assisted bicycle provided in an embodiment of the present application.

### Detailed Description

The technical solutions in the embodiments of the present application will be clearly and completely described below with reference to the drawings of the embodiments of the present application. It is apparent that the described embodiments are only part of the embodiments of the present application, and not all embodiments. All other embodiments obtained by a person skilled in the art based on the embodiments of the present application without making inventive efforts are also within the scope of protection of the present application.

The flowcharts shown in the drawings are provided merely for illustrative purposes and do not necessarily include all content and operations/steps, nor must they be executed in the described order. For example, some operations/steps can be further divided, combined, or partially merged, so the actual execution order may change according to the practical situation.

Some embodiments of the present application provide a control method for an assisted bicycle, an assistance assembly, and an assisted bicycle. The following describes some embodiments of the present application in detail with reference to the drawings. In the absence of conflict, the following embodiments and the features in the embodiments can be combined with each other.

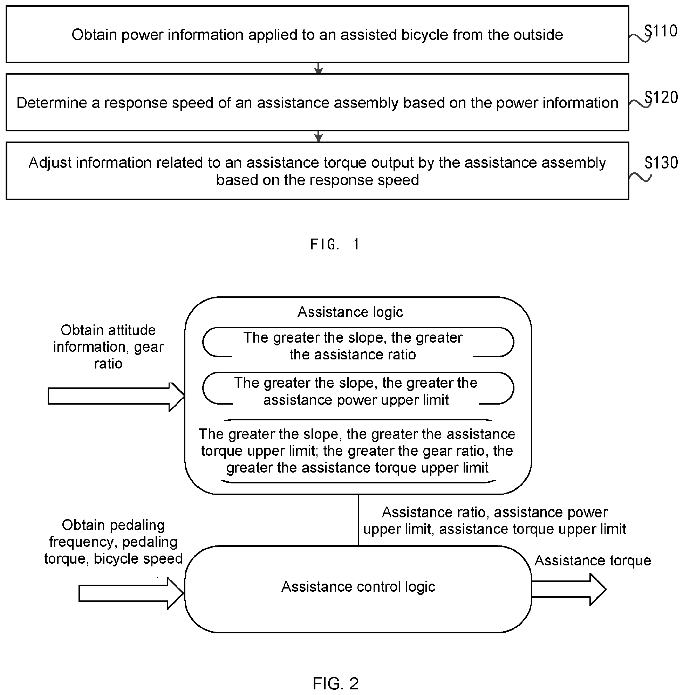

With reference to FIG. 1, FIG. 1 is a schematic flow diagram of a control method for an assisted bicycle provided in an embodiment of the present application.

The control method for an assisted bicycle provided in the embodiments of the present application can be applied to an assisted bicycle. An assisted bicycle is a bicycle that provides additional assistance torque to aid the user in pedaling. The assisted bicycle can be models such as an assisted mountain bike, an assisted cargo bike, or an assisted city bike.

The assisted bicycle can be an electric assisted bicycle (E-bike), but is not limited thereto. For example, the assisted bicycle can be a fuel-assisted bicycle, a natural gas-assisted bicycle, a hydrogen-assisted bicycle, or a hybrid-assisted bicycle (e.g., a combination of electric and fuel assistance). For ease of illustration, the embodiments of the present application are mainly described with electric assisted bicycles as examples. For instance, the assisted bicycle can be an electric assisted mountain bike (E-MTB), an electric assisted cargo bike (e-Cargo Bike), an electric assisted city bike (e-City Bike), or other electric assisted bicycles.

The assisted bicycle is equipped with an assistance assembly. For example, the assistance assembly of an electric assisted bicycle includes an assistance motor; the assistance assembly of a fuel-assisted bicycle includes a fuel internal combustion engine. The electric assisted bicycle further includes a battery. The battery serves as an energy source for the assistance motor and can provide high-power current output to the assistance motor. The electric assisted bicycle also includes a charger or can be connected to a charger. The charger can provide regenerative energy to the battery. The charger converts AC mains power into DC to charge the battery; the charger can support fast-charging functionality to shorten the preparation time for riding.

The assistance assembly is mechanically coupled to the wheel transmission of the assisted bicycle, such as by direct transmission coupling or indirect transmission coupling. The assistance torque output by the assistance assembly is applied to the wheel to drive its rotation. Optionally, the assistance assembly can be mounted on the wheel, such as a hub-mounted assistance assembly; or the assistance assembly can be connected to the wheel through a transmission component, that is, the assistance assembly is mounted at the chainring of the assisted bicycle, which can be referred to as a mid-mounted assistance assembly.

As shown in FIG. 1, the control method for the assisted bicycle includes steps S110 to S130.

Step S110: Obtain power information applied to an assisted bicycle from the outside.

Step S120: Determine a response speed of an assistance assembly based on the power information.

Step S130: Adjust information related to an assistance torque output by the assistance assembly based on the response speed.

In the related art, the response speed of the assistance assembly is generally a constant value. However, under different circumstances, the user's expectations for the response speed may change. Therefore, if the response speed of the assistance assembly can be adjusted based on the power information of the assisted bicycle, the assisted bicycle can more intelligently meet the user's needs and enhance the overall user experience.

First, refer to step S110: obtain power information applied to the assisted bicycle from the outside.

Specifically, the assistance assembly of the assisted bicycle is configured to output an assistance torque in response to power applied to the assisted bicycle from the outside.

For example, the power applied to the assisted bicycle from the outside can include at least one of the following: power applied by the user to the pedal assembly of the assisted bicycle, thrust or pull applied to the assisted bicycle, or power applied to the assisted bicycle by gravity.

For instance, when the power applied to the assisted bicycle from the outside causes the assisted bicycle to move forward or have a tendency to move forward, the assistance assembly outputs an assistance torque to maintain the forward-moving state of the assisted bicycle or to initiate forward movement. In this case, the assistance assembly outputs an assistance torque to assist the user's effort, thereby saving the user's physical effort.

In some embodiments, the assisted bicycle includes a pedal assembly, and the power information includes power information applied by the user to the pedal assembly. Of course, this is not limiting. Exemplarily, the power information can include speed information of the assisted bicycle caused by a pull, a push, or gravity applied to the assisted bicycle to make it move. For example, the power information includes the speed of the assisted bicycle when the user is pushing it. This speed can be obtained, for example, via a speed sensor. Exemplarily, the speed sensor includes a Hall sensor or a reed switch mounted on the rear wheel frame. The assisted bicycle can calculate the speed by detecting the rotational frequency of magnets on the wheel using the Hall sensor or the reed switch.

Exemplarily, the power information applied by the user to the pedal assembly includes the user's pedaling frequency and/or pedaling torque.

For example, the assisted bicycle includes a pedaling frequency sensor, which can obtain the user's pedaling frequency on the pedal assembly. For example, the assisted bicycle includes a torque sensor, which can obtain the pedaling torque generated by the user on the pedal assembly. The pedaling frequency sensor and/or the torque sensor can be mounted on the pedal assembly.

Exemplarily, the power information includes the pedaling frequency; the method further includes: in response to the pedaling frequency being greater than or equal to a pedaling frequency threshold, controlling the assistance assembly to output the assistance torque. When the pedaling frequency of the user pedaling the pedal assembly is greater than or equal to the pedaling frequency threshold, for example, greater than 5 revolutions per second, it can be determined that the user has a pedaling behavior. The assisted bicycle causes the assistance torque and the pedaling force of the user to be jointly transmitted to the wheel by controlling the assistance assembly to output the assistance torque, thereby achieving an assistance amplification effect and saving the user's effort.

Optionally, the method further includes: in response to the pedaling frequency being less than the pedaling frequency threshold, controlling the assistance assembly to stop outputting the assistance torque. When the pedaling frequency is less than the pedaling frequency threshold, it can be determined that the user does not have a pedaling behavior or the pedaling behavior is not obvious, for example, the user expects to stop. The assisted bicycle can prevent instability of the assisted bicycle and/or facilitate stopping of the assisted bicycle by controlling the assistance assembly to stop outputting the assistance torque.

Exemplarily, the assisted bicycle can control the assistance assembly to output the assistance torque when the pedaling torque of the user pedaling the pedal assembly is greater than or equal to a torque threshold, thereby saving the user's effort.

For example, the power information includes the pedaling frequency and also includes the pedaling torque. The controlling the assistance assembly to output the assistance torque in response to the pedaling frequency being greater than or equal to the pedaling frequency threshold includes: controlling the assistance assembly to output the assistance torque in response to the pedaling frequency being greater than or equal to the pedaling frequency threshold and the pedaling torque being greater than or equal to a pedaling torque threshold. That is, it is determined that the user has a pedaling behavior only when the pedaling frequency is greater than or equal to the pedaling frequency threshold and the pedaling torque is greater than or equal to the pedaling torque threshold. In this way, the assistance assembly can be prevented from erroneously outputting the assistance torque when the user does not need assistance, which would cause the assisted bicycle to move unexpectedly and result in potential safety hazards.

Step S120: Determine, based on the power information, a response speed of the assistance assembly.

Step S130: Adjust, based on the response speed, relevant information of the assistance torque output by the assistance assembly.

For example, the relevant information of the assistance torque may include at least one of the following: power of the assistance motor, voltage of the assistance motor, current of the assistance motor, and rotational speed of the assistance motor. Certainly, it is not limited thereto.

By adjusting the corresponding response speed according to the power information to control the assistance assembly, compared with controlling the assistance assembly according to the power information based on a fixed preset time, the method in some embodiments of the present application can enable the assistance assembly to output the assistance torque at a more appropriate timing, thereby improving the intelligence level of assistance and user experience. For example, stability of the assisted bicycle can be improved to enhance safety and/or the assistance effect and user experience can be improved.

In some embodiments, the response speed is used to characterize a length of a time interval between a time when the assistance assembly outputs the assistance torque and a time when the power information applied by the outside to the assisted bicycle is detected.

For example, when the response speed is relatively fast, the assisted bicycle can more quickly respond to the power information applied thereto from the outside and output the corresponding assistance torque. For example, when the user pedals, the user can more quickly feel the assistance effect of the assistance assembly, for example, the assisted bicycle responds more sensitively and accelerates faster.

For example, when the response speed is relatively slow, the assisted bicycle can respond more slowly to the power information applied thereto from the outside and output the corresponding assistance torque, thereby improving stability of the assisted bicycle. For example, discomfort to the user caused by a sudden large change in the assistance torque can be prevented.

Exemplarily, the power information includes the pedaling frequency; the lower the pedaling frequency, the faster the response speed; and the higher the pedaling frequency, the slower the response speed.

When the pedaling frequency is relatively low, increasing the response speed can provide assistance feedback to the user more quickly while ensuring relatively high stability. For example, when the assisted bicycle is going uphill, the pedaling frequency is relatively low. At this time, the assisted bicycle can recognize that the user may need faster assistance to complete the uphill process. Therefore, when the pedaling frequency of the user is relatively low, the assistance assembly can quickly output the assistance torque, so as to assist the user in going uphill more sensitively.

When the pedaling frequency is relatively high, responding more slowly to the power information applied to the assisted bicycle from the outside and outputting the corresponding assistance torque can improve stability of the assisted bicycle. For example, when the pedaling frequency of the user is relatively high, the assistance assembly can consider that the user is in a relatively stable state, and reducing the response speed can prevent discomfort to the user caused by rapid sudden changes in the assistance torque.

In some embodiments, the method further includes: obtaining an assistance ratio of the assisted bicycle. The assistance ratio is used to indicate a ratio between the assistance torque provided by the assistance assembly and the pedaling torque of the user. With reference to FIG. 2, the assistance torque provided by the assistance assembly can be determined according to the obtained assistance ratio and the pedaling torque of the user.

The assistance torque provided by the assistance assembly can be determined according to a product of the pedaling torque of the user and the assistance ratio. Determining the assistance torque provided by the assistance assembly according to the pedaling torque of the user and the assistance ratio can enable the assistance assembly to output the assistance torque of an appropriate magnitude. In this way, the output assistance torque better meets the needs of the user, thereby improving user experience.

Exemplarily, in Step S130 the adjusting the relevant information of the assistance torque output by the assistance assembly according to the response speed includes: adjusting the relevant information of the assistance torque output by the assistance assembly based on the response speed and the assistance ratio. The assistance assembly can output the assistance torque of an appropriate magnitude at an appropriate timing, thereby improving user experience.

Exemplarily, the obtaining the assistance ratio of the assisted bicycle may include: obtaining a slope of a current environment in which the assisted bicycle is located; and determining the assistance ratio of the assisted bicycle according to the slope. For example, with reference to FIG. 2: the greater the slope, the greater the corresponding assistance ratio. Certainly, an upper limit of the assistance ratio may also be restricted. For example, a slope during uphill is greater than a slope during downhill, for example, the slope during uphill is greater than zero, and the slope during downhill is less than zero.

For example, the slope is determined according to at least one of the following information: attitude information of the assisted bicycle, map information of the current environment in which the assisted bicycle is located, and environment sensor information of the assisted bicycle.

For example, the assisted bicycle further includes an attitude sensor, such as an IMU (Inertial Measurement Unit) sensor; the attitude information of the assisted bicycle, such as a pitch angle, can be obtained through the attitude sensor; and the slope can be determined according to the attitude information of the assisted bicycle.

For example, the assisted bicycle further includes a positioning device; map information of the current environment can be obtained according to position information determined by the positioning device, and the slope is determined from the map information.

For example, the assisted bicycle further includes environment sensors such as a visual sensor and/or a radar; the slope is determined according to environment information sensed by the environment sensors and a pre-built environment information map.

Adjusting the assistance ratio of the assisted bicycle to correspond to the current slope can enable the assistance torque output by the assistance assembly to correspond to the slope; for example, without requiring the user to increase the pedaling torque, the assisted bicycle can provide a greater assistance torque, so that the user can save more effort; moreover, the assisted bicycle can maintain a relatively stable vehicle speed when going uphill and prevent the assisted bicycle from rolling backward.

In some embodiments, the assisted bicycle includes an automatic assistance mode and/or a fixed assistance mode. For example, the assisted bicycle can determine the assistance mode according to an operation of the user, or the assisted bicycle can also automatically adjust the assistance mode of the assisted bicycle according to a current environment in which the assisted bicycle is located and/or a current state of the assisted bicycle. For example, when the slope of the current environment is greater than or equal to a slope threshold, the assisted bicycle can determine that it is in the automatic assistance mode.

Exemplarily, in response to the assisted bicycle being in the automatic assistance mode, the assistance ratio of the assisted bicycle is determined according to the slope.

Exemplarily, the assisted bicycle includes a fixed assistance mode. In response to the assisted bicycle being in the fixed assistance mode, the assistance ratio is a fixed value. The obtaining the assistance ratio of the assisted bicycle includes: obtaining the fixed assistance mode; and determining the assistance ratio according to the fixed assistance mode.

For example, assistance ratios corresponding to at least two fixed assistance modes are different. Exemplarily, the assistance mode of the assisted bicycle can be determined as which fixed assistance mode according to a user operation; or the assisted bicycle can also be automatically adjusted to a corresponding fixed assistance mode according to a current environment in which the assisted bicycle is located and/or a state of the assisted bicycle.

For example, the fixed assistance modes include a first fixed assistance mode and a second fixed assistance mode; and the fixed values include a first fixed value and a second fixed value. In response to the assisted bicycle being in the first fixed assistance mode, the assistance ratio is the first fixed value. In response to the assisted bicycle being in the second fixed assistance mode, the assistance ratio is the second fixed value. The first fixed assistance mode and the second fixed assistance mode are different; and the first fixed value and the second fixed value are different.

Optionally, the fixed assistance mode is determined as the first fixed assistance mode or the second fixed assistance mode according to terrain of the environment in which the assisted bicycle is located. For example, when the slope of the current environment in which the assisted bicycle is located is greater than or equal to a first slope threshold and less than a second slope threshold, it is determined that the assisted bicycle is in the first fixed assistance mode; and when the slope is greater than or equal to the second slope threshold, it is determined that the assisted bicycle is in the second fixed assistance mode. The second fixed value is greater than the first fixed value. By adjusting the fixed assistance mode of the assisted bicycle, the corresponding assistance ratio can be adjusted, so that the assistance torque output by the assistance assembly corresponds to the terrain of the environment in which the bicycle is located.

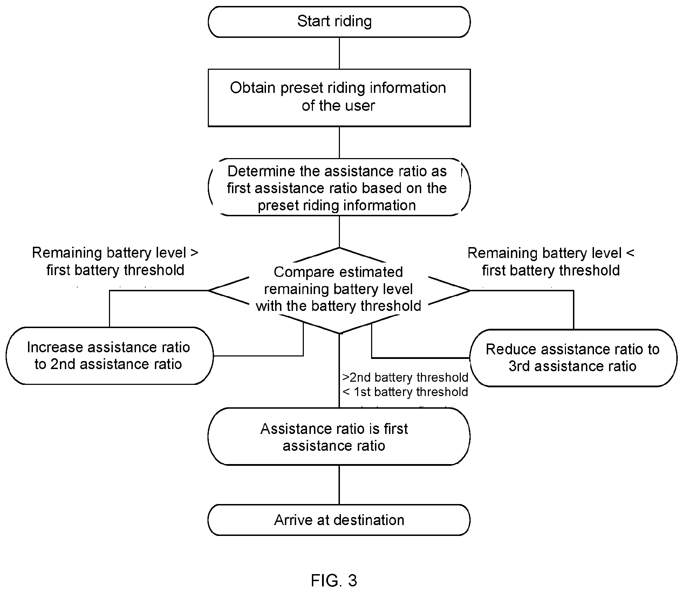

In some embodiments, with reference to FIG. 3, the obtaining the assistance ratio of the assisted bicycle may include: obtaining preset riding information of the user. The preset riding information includes at least one of a preset riding distance, preset riding road condition, and a current battery level of the assisted bicycle; and determining the assistance ratio as a first assistance ratio according to the preset riding information. The preset riding distance can be determined according to a riding route between a current location and a target location.

For example, the assisted bicycle can activate the power management function according to a user operation. The assisted bicycle can plan power management during riding according to the riding distance, road condition environment, and the like. After the user inputs a corresponding distance and road condition in an application program, the assisted bicycle can automatically adjust the assistance ratio, so as to ensure that the user can obtain the most appropriate assistance experience on the basis that the battery level satisfies the riding distance during riding. For example, the road condition may be divided into a flat road, a mountain road, and the like. After the user selects the mountain road, the assisted bicycle will automatically select a larger assistance ratio to ensure riding comfort of the user. As another example, when the preset riding distance input by the user is relatively long, in order to ensure that the assistance assembly has energy output throughout the entire riding process, the assistance ratio may be appropriately reduced. This is because under a large assistance ratio, even when riding the same distance, consumption of the assistance assembly will be greater.

Exemplarily, automatically adjusting the assistance ratio according to the preset riding distance and/or the preset riding road condition and the current battery level can realize real-time power management of the assisted bicycle during the riding process. For example, the assisted bicycle adjusts the assistance ratio in real time through power management planning based on mileage and battery level. In this way, it can be ensured that the assisted bicycle has sufficient battery level to provide assistance throughout the entire preset riding distance, so as to alleviate battery anxiety of the user during long-distance riding.

Exemplarily, the method further includes: in response to a remaining battery level after estimating that the current battery level completes the preset riding distance being greater than a battery threshold, determining the assistance ratio as a second assistance ratio; and in response to the remaining battery level after estimating that the current battery level completes the preset riding distance being less than the battery threshold, determining the assistance ratio as a third assistance ratio. The second assistance ratio is greater than the first assistance ratio; and the third assistance ratio is less than the first assistance ratio. For example, during the riding process, the remaining battery level after completing the preset riding distance based on the current battery level can be estimated once or multiple times, and the estimated remaining battery level each time can be compared with the battery threshold, and the assistance ratio can be automatically adjusted according to a comparison result.

For example, with reference to FIG. 3, the battery threshold includes a first battery threshold and a second battery threshold. The first battery threshold is greater than the second battery threshold. The determining the assistance ratio as the second assistance ratio in response to the remaining battery level after estimating that the current battery level completes the preset riding distance being greater than the battery threshold, and determining the assistance ratio as the third assistance ratio in response to the remaining battery level after estimating that the current battery level completes the preset riding distance being less than the battery threshold, includes: in response to the remaining battery level after estimating that the current battery level completes the preset riding distance being greater than the first battery threshold, determining the assistance ratio as the second assistance ratio; in response to the remaining battery level after estimating that the current battery level completes the preset riding distance being less than the second battery threshold, determining the assistance ratio as the third assistance ratio; and in response to the remaining battery level after estimating that the current battery level completes the preset riding distance being greater than the second battery threshold and less than the first battery threshold, determining the assistance ratio as the first assistance ratio.

Increasing the assistance ratio when the estimated remaining battery level is greater than the first battery threshold can provide the user with a more appropriate assistance experience; decreasing the assistance ratio when the estimated remaining battery level is less than the second battery threshold can ensure that the assisted bicycle has sufficient battery to provide assistance throughout the entire preset riding distance, thereby alleviating battery anxiety during long-distance riding.

In some embodiments, with reference to FIG. 2, the method further includes: obtaining a slope of the current environment in which the assisted bicycle is located; and determining an assistance power upper limit of the assistance assembly according to the slope. For example, when providing the assistance torque, the assistance power of the assistance motor is always less than or equal to the assistance power upper limit, preventing the assistance motor from overheating. For example, the greater the slope, the greater the assistance power upper limit, so as to provide greater assistance power when going uphill and prevent the assisted bicycle from rolling backward.

In some embodiments, with reference to FIG. 2, the method further includes: obtaining a slope of the current environment in which the assisted bicycle is located; and determining an assistance torque upper limit of the assistance assembly according to the slope. For example, the assistance torque of the assistance motor is always less than or equal to the assistance torque upper limit, preventing the assistance motor from overheating. For example, the greater the slope, the greater the assistance torque upper limit, so as to provide greater assistance torque when going uphill and prevent the assisted bicycle from rolling backward.

In some embodiments, with reference to FIG. 2, the method further includes: obtaining a gear ratio of the assisted bicycle; and determining an assistance torque upper limit of the assistance assembly according to the gear ratio.

For example, the gear ratio can be determined according to a gear of the assisted bicycle. For example, the gear ratio can be determined according to a current gear of a gear shifter; of course, this is not limited thereto, as will be described below.

For example, the greater the gear ratio, the greater the assistance torque upper limit, so that when the assistance torque is transmitted to the wheel, it can provide a sufficient assistance effect.

In some embodiments, with reference to FIG. 2, the method further includes: obtaining a speed of the assisted bicycle; and in response to the speed of the assisted bicycle being greater than a speed threshold, controlling the assistance assembly to stop outputting the assistance torque. Stopping the output of the assistance torque at a relatively high speed can prevent excessive speed and ensure riding safety; for example, when the speed is greater than 25 km/h, the assistance assembly stops outputting the assistance torque, ensuring safety while also enhancing the user's riding enjoyment.

In some embodiments, the method further includes: in response to the user triggering a trigger device, increasing the assistance power upper limit and/or the assistance torque upper limit of the assistance assembly. The trigger device is, for example, provided on the handlebar of the assisted bicycle. For example, when the user requires rapid acceleration or climbing a steeper slope, the user can operate the trigger device to increase the assistance power upper limit and/or the assistance torque upper limit of the assistance assembly, so that the assistance assembly can provide greater assistance torque to accommodate rapid acceleration or climbing a steeper slope.

Exemplarily, in response to the user triggering the trigger device, the assistance power upper limit and/or the assistance torque upper limit of the assistance assembly are increased within a preset time. For example, when the duration of increasing the assistance power upper limit and/or the assistance torque upper limit of the assistance assembly reaches the preset time, such as 30 seconds, the original assistance power upper limit and/or assistance torque upper limit of the assistance assembly are restored to prevent the assistance motor from overheating.

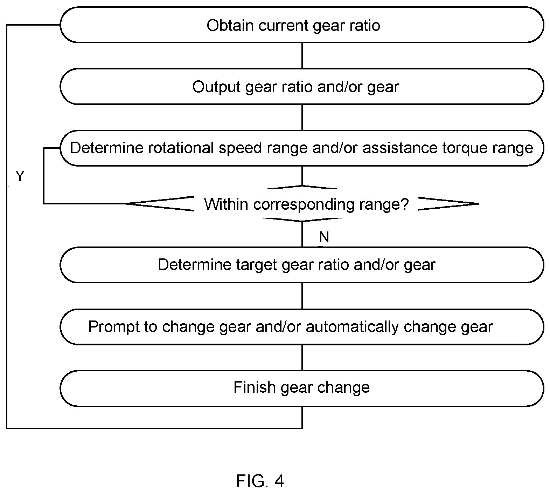

In some embodiments, with reference to FIG. 4, the method further includes: obtaining a current gear ratio of the assisted bicycle; and adjusting prompt information of the current gear ratio according to the output of the state information of the assistance assembly to prompt the user to adjust the current gear ratio and/or controlling the assisted bicycle to adjust the current gear ratio.

Adjusting the current gear ratio of the assisted bicycle according to the current state of the assistance assembly can enable the adjusted gear ratio to maintain a more optimal working state of the assistance assembly.

Exemplarily, the state information of the assistance assembly includes the rotational speed and/or the assistance torque of the assistance assembly. For example, for the assistance motor, when the rotational speed and/or torque is within a corresponding preset range, the energy utilization efficiency of the assistance motor is higher; and/or heat generation is lower; and/or the tension of the chain in the transmission components is appropriate. Adjusting the current gear ratio of the assisted bicycle according to the rotational speed and/or torque of the assistance motor can improve the energy utilization efficiency of the motor and/or reduce heat generation of the assistance motor and/or decrease the tension of the chain.

For example, with reference to FIG. 4, the assisted bicycle can, in response to the rotational speed of the assistance assembly being outside a rotational speed range and/or in response to the assistance torque of the assistance assembly being outside an assistance torque range, output prompt information to adjust the current gear ratio, so as to prompt the user to adjust the current gear ratio and/or control the assisted bicycle to adjust the current gear ratio.

For example, when the rotational speed of the assistance assembly is within 2000 to 3500 rpm and the assistance torque is within 50 to 100 N·m, the assistance assembly is in a high-efficiency assistance state; when the rotational speed and/or the assistance torque of the assistance assembly is outside the corresponding range, the efficiency of the assistance assembly is relatively low. Shifting gears can improve the efficiency of the assistance assembly.

For example, during uphill riding, if the current gear ratio is relatively high, the assistance assembly may operate in a high-speed, high-torque, low-efficiency range. At this time, battery endurance is short and the chain bears a large tension; adjusting the current gear ratio, for example by guiding the user to reduce the gear, can bring the assistance assembly closer to a high-efficiency operating range and reduce the chain tension.

In some embodiments, the assisted bicycle includes a wheel and a crank. The crank is configured to transmit the pedaling torque of the user to drive the wheel. For example, the pedal assembly of the assisted bicycle includes a crank and a pedal connected to the crank; the assistance assembly includes an assistance motor; and the assistance motor is configured to output the assistance torque for driving the wheel. For example, the assistance motor outputs the assistance torque to drive the wheel through a transmission assembly.

Exemplarily, the current gear ratio of the assisted bicycle is determined according to the rotational speed of the assistance motor and the rotational speed of the wheel; and/or the current gear ratio of the assisted bicycle is determined according to the rotational speed of the crank and the rotational speed of the wheel.

For example, in response to the assistance motor outputting the assistance torque, the current gear ratio of the assisted bicycle is determined according to the rotational speed of the assistance motor and the rotational speed of the wheel. For example, the greater the ratio of the rotational speed of the wheel to the rotational speed of the assistance motor, the greater the current gear ratio.

For example, when the assistance motor does not output the assistance torque, the current gear ratio of the assisted bicycle can be determined according to the rotational speed of the crank and the rotational speed of the wheel. For example, the greater the ratio of the rotational speed of the wheel to the rotational speed of the crank, the greater the current gear ratio.

Determining the current gear ratio in a corresponding manner based on whether the assistance motor outputs the assistance torque can improve the accuracy of the gear ratio. Of course, this is not limiting. For example, the gear ratio can be determined based on a preset correspondence between the rotational speed of the assistance motor, the rotational speed of the crank, the rotational speed of the wheel, and the gear ratio, to determine the gear ratio of the current rotational speed of the assistance motor, the current rotational speed of the crank, and the current rotational speed of the wheel.

Optionally, as shown in FIG. 4, the method further includes: outputting the gear ratio of the assisted bicycle and/or a gear corresponding to the gear ratio. For example, the gear ratio and/or the corresponding gear can be displayed on a display mounted on the assisted bicycle. The display is, for example, mounted on the handlebar of the assisted bicycle; the user can know the gear ratio and/or the corresponding gear without turning back to check the hub status, improving riding convenience. For example, the gear ratio and/or the corresponding gear of the assisted bicycle can also be announced through a speaker.

For example, prompt information for adjusting the current gear ratio can also be output through the display and/or speaker. Optionally, the assisted bicycle can further output a target gear ratio and/or a target gear to prompt the user to adjust the current gear ratio to the target gear ratio and/or adjust the current gear to the target gear. The target gear ratio and/or target gear can be determined based on the state information of the assistance assembly. For example, the target gear may be determined as one gear higher or lower than the current gear; or the specific target gear can be determined.

In some embodiments, with reference to FIG. 2, some embodiments of the present application can obtain at least one of the user's pedaling frequency, pedaling torque, slope, gear ratio, and the like through one or more sensors, such as a speed sensor, pedaling frequency sensor, torque sensor, attitude sensor, vision sensor, environmental sensor, or the like. The assisted bicycle is controlled based on the obtained information; for example, sensor data fusion can be performed in an algorithm strategy, and the result can be applied to control, thereby improving the intelligence of assistance and user experience. By fusing information such as the vehicle's overall attitude, pedal angle, and speed, a better intelligent riding assistance function can be achieved. For example, the assisted bicycle can automatically adjust the assistance ratio and the response speed of the assistance assembly to keep the rider within a relatively comfortable pedaling frequency range. When the rider's pedaling frequency is relatively high, the response speed of the assistance assembly can be reduced, allowing the rider to lower the pedaling frequency based on feedback from the pedal feel.

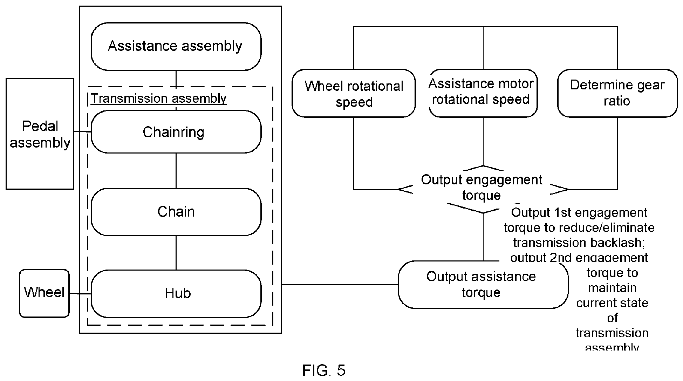

In some embodiments, with reference to FIG. 5, the assisted bicycle further includes a pedal assembly, a transmission assembly, and a wheel(s); the assistance assembly and the pedal assembly are both connected to the wheel through the transmission assembly.

The transmission assembly includes a first transmission member and a second transmission member that is meshed with the first transmission member; there is transmission backlash, or a transmission gap, between the first transmission member and the second transmission member.

Exemplarily, with reference to FIG. 5, the transmission assembly includes a chainring, a chain, and a hub. For example, the first transmission member includes the chainring; the second transmission member includes the hub. The transmission backlash includes the backlash between the chainring and the chain and/or the backlash between the chainring and the hub.

The inventors of the present application have found that, due to the transmission backlash between the first transmission member and the second transmission member, when the user begins pedaling, it is necessary to pedal for a period of time first to rotate the chainring, thereby tightening the chain between the chainring and the hub. After that, the user needs to pedal again to make the wheel start rotating. The pedaling feel for the user is not very good, and the start is relatively slow; if the assistance torque is output when the user begins pedaling, it will cause a relatively large impact on the transmission members; moreover, outputting the assistance torque when the user begins pedaling makes the riding start less smooth, reducing the user experience. Based on this, some embodiments of the present application can also improve the riding start experience by controlling the assistance assembly.

In some embodiments, with reference to FIG. 5, the method may further include: in response to the user's pedaling of the pedal assembly, controlling the assistance assembly to output engagement torque to reduce or eliminate the transmission backlash; after the assistance assembly outputs the engagement torque, assisting the user in riding by controlling the assistance assembly to output the assistance torque. Exemplarily, the assistance assembly includes an assistance motor. The assistance motor is configured to provide the engagement torque.

Exemplarily, the user's pedaling of the pedal assembly can be detected through a pedaling frequency sensor and/or a torque sensor. When the user's pedaling action is detected, the assistance assembly is first controlled to output engagement torque to reduce or eliminate the transmission backlash. For example, the engagement torque is smaller than the assistance torque; only after the transmission backlash is reduced or eliminated is the assistance torque output to assist the user's riding, thereby reducing the large impact of the assistance torque on the transmission members. The assistance torque, together with the user's pedaling torque, drives the wheel rotation, making the riding start faster and smoother.

Exemplarily, with reference to FIG. 5, the engagement torque may include a first engagement torque and a second engagement torque. The method further includes: in response to the presence of the transmission backlash in the transmission members, controlling the assistance motor to output the first engagement torque to reduce or eliminate the transmission backlash; and in response to the transmission backlash being reduced or eliminated, controlling the assistance motor to output the second engagement torque to maintain the current state of the transmission members. Herein, the first engagement torque is different from the second engagement torque. By controlling the assistance assembly to output engagement torque of different magnitudes when the transmission members are in different states, the transmission backlash can be more effectively eliminated, thereby improving the user experience.

For example, the first engagement torque is greater than the second engagement torque. Outputting a larger first engagement torque when the transmission backlash is relatively large can reduce the transmission backlash more quickly; outputting a smaller second engagement torque when the transmission backlash is relatively small can maintain the transmission backlash sufficiently small, for example, keeping the chain tight while the second engagement torque does not drive the wheel rotation. After the transmission backlash is eliminated, when the user continues pedaling, for instance, controlling the assistance assembly to output the assistance torque when the pedaling frequency is greater than or equal to a pedaling frequency threshold, the engagement of the assistance torque at the start of riding can be smoother.

Exemplarily, with reference to FIG. 5, the method further includes: determining whether the transmission backlash has been reduced or eliminated based on the rotational speed of the assistance motor, the rotational speed of the wheel, and the gear ratio of the assisted bicycle; and controlling the assistance motor to output engagement torque or assistance torque according to the determination result.

For example, in response to the rotational speed of the assistance motor, the rotational speed of the wheel, and the gear ratio of the assisted bicycle satisfying a preset engagement condition, it is determined that the transmission backlash has been eliminated. For instance, when the transmission backlash is eliminated, that is, the transmission members have engaged, the rotational speed of the assistance motor, the rotational speed of the wheel, and the gear ratio of the assisted bicycle are generally in a constant relationship; when the currently detected rotational speed of the assistance motor, the rotational speed of the wheel, and the gear ratio of the assisted bicycle satisfy this constant relationship, it can be determined that the transmission backlash has been eliminated; and in response to the transmission backlash being eliminated, the assistance motor is controlled to output the second engagement torque to maintain the current state of the transmission members.

For example, in response to the rotational speed of the assistance motor, the rotational speed of the wheel, and the gear ratio of the assisted bicycle not satisfying the preset engagement condition, it is determined that the transmission backlash has not been eliminated. When the currently detected rotational speed of the assistance motor, the rotational speed of the wheel, and the gear ratio of the assisted bicycle do not satisfy this constant relationship, for example, when the wheel rotational speed is relatively slow, it can be determined that the transmission backlash has not been eliminated; at this time, the assistance motor can be controlled to output the first engagement torque to reduce or eliminate the transmission backlash.

In some embodiments, the method further includes: in response to the assisted bicycle being in an uphill state and the speed of the assisted bicycle being less than or equal to a preset speed, controlling the assistance assembly to output a balancing torque. The balancing torque is configured to prevent the assisted bicycle from rolling backward, thereby maintaining balance. For example, when the assisted bicycle is stationary, at a start, or stops while going uphill, the preset speed may be, for example, less than or equal to 0.5 meters per second. It should be noted that at this time, the user may be riding the assisted bicycle or may be pushing it. Outputting the balancing torque to prevent rollback and maintain balance when the assisted bicycle is 1) stationary while uphill, 2) preparing to start, or 3) stopping while going uphill can improve the safety of the assisted bicycle.

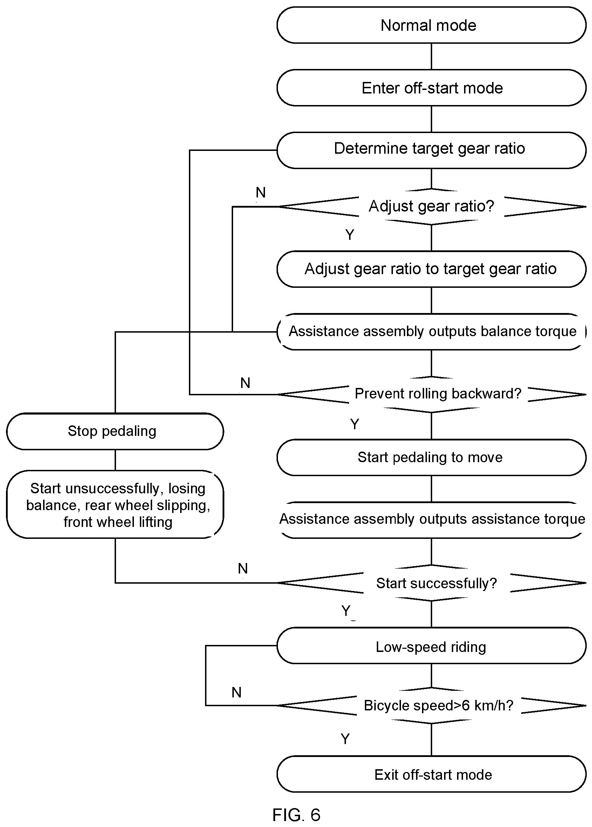

Exemplarily, with reference to FIG. 6, when the user is riding on the assisted bicycle, and it is determined based on the current slope of the environment that the assisted bicycle is in an uphill state and the speed of the assisted bicycle is less than or equal to the preset speed, the assisted bicycle can automatically enter the off-start mode or enter the off-start mode based on user operation; in the off-start mode, the assistance assembly outputs the balancing torque to prevent the assisted bicycle from rolling backward and to maintain balance.

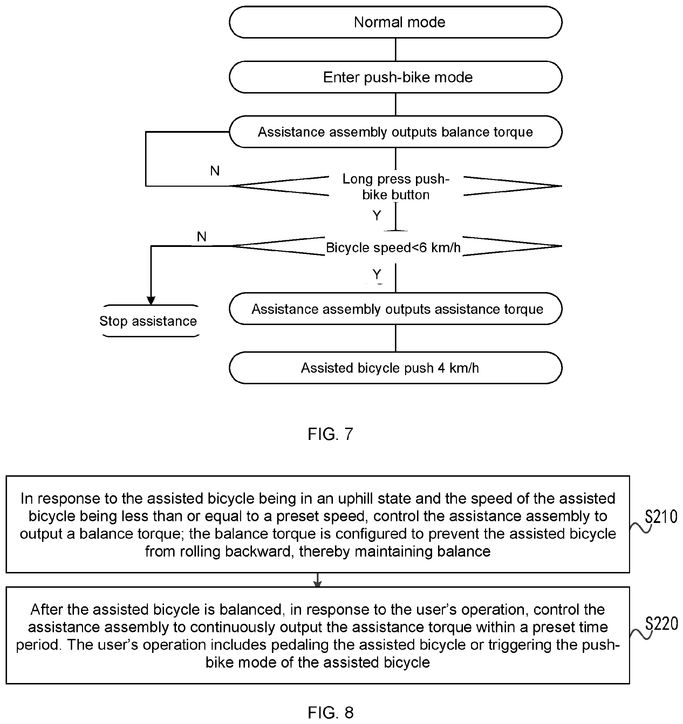

Exemplarily, with reference to FIG. 7, when the user is not riding on the assisted bicycle, for example, when pushing the assisted bicycle, and it is determined based on the current slope of the environment that the assisted bicycle is in an uphill state and the speed of the assisted bicycle is less than or equal to the preset speed, the assisted bicycle can automatically enter the push-bike mode or enter the push-bike mode based on user operation such as pressing the push-bike button; in the push-bike mode, the assistance assembly outputs the balancing torque to prevent the assisted bicycle from rolling backward and to maintain balance.

Exemplarily, the method further includes: in response to the user riding on the assisted bicycle, determining the balancing torque based on the slope of the environment where the assisted bicycle is located, the mass of the assisted bicycle, and the mass of the user; for example, the greater the slope, the greater the balancing torque; the greater the mass of the assisted bicycle, the greater the balancing torque; the greater the mass of the user, the greater the balancing torque. Optionally, the user's mass may be pre-entered by the user. This is not limiting. For example, when the user releases the brake and stops pedaling, that is, when the user places their weight on the assisted bicycle, the assistance assembly adjusts its output to maintain the torque that keeps the assisted bicycle balanced, which can be used as the balancing torque.

Exemplarily, the method further includes: in response to the user not riding on the assisted bicycle, determining the balancing torque based on the slope of the environment where the assisted bicycle is located and the mass of the assisted bicycle; for example, the greater the slope, the greater the balancing torque; the greater the mass of the assisted bicycle, the greater the balancing torque.

Exemplarily, the method further includes: after the assisted bicycle is balanced, in response to the user's operation, controlling the assistance assembly to continuously output the assistance torque within a preset time period. The user's operation includes the user pedaling the assisted bicycle or triggering the push-bike mode of the assisted bicycle.

As shown in FIG. 6, in response to the user beginning the pedaling operation for riding, the assistance assembly is controlled to output the assistance torque to assist in the start; the assistance torque is continuously output within the preset time period so that the assisted bicycle can achieve an initial speed, reducing the torque required from the user's pedaling. For example, the assistance torque may compensate for 30% to 99% of the torque required for the assisted bicycle to ride uphill. The user can focus more on maintaining the balance of the assisted bicycle at low speed, allowing the rider to resume riding on a slope and improving the start success rate, thereby preventing start failures. Examples of start failure include the assisted bicycle losing balance, the rear wheel slipping, or the front wheel lifting.

For example, the preset time period includes a first time period and a second time period. During the first time period, there is external power applied to the assisted bicycle, such as the user's pedaling torque; during the second time period, there is no external power applied to the assisted bicycle. Controlling the assistance assembly to continuously output the assistance torque within the preset time period includes controlling the assistance assembly to output the assistance torque during both the first time period and the second time period. By continuing to output the assistance torque during the second time period, for example, 1 second, when the user stops pedaling, start failure of the assisted bicycle can be prevented when the user temporarily stops pedaling.

For example, controlling the assistance assembly to continuously output the assistance torque within the preset time period includes controlling the assistance assembly to continuously output the assistance torque within the preset time period based on the speed of the assisted bicycle. As shown in FIG. 6, after the assisted bicycle successfully starts, if the speed is low, for example, less than or equal to 6 kilometers per hour (km/h), the assistance assembly is controlled to continuously output the assistance torque within the preset time period to increase the speed, so that the speed meets the user's riding requirements, for example, greater than 6 kilometers per hour.

Optionally, as shown in FIG. 6, in response to the assisted bicycle being in an uphill state and the speed of the assisted bicycle being less than or equal to a preset speed, the method further includes: determining a target gear ratio of the assisted bicycle based on the slope of the environment where the assisted bicycle is located; for example, the greater the slope, the smaller the target gear ratio.

Exemplarily, based on the target gear ratio, gear ratio adjustment prompt information can be output to prompt the user to adjust the gear ratio of the assisted bicycle to the target gear ratio; or the gear ratio of the assisted bicycle can be adjusted to the target gear ratio based on the target gear ratio. For example, the gear ratio adjustment prompt information can be output through a display and/or a speaker.

For example, after adjusting the gear ratio of the assisted bicycle to the target gear ratio, when the pedaling frequency is low at the start, a relatively small assistance torque together with the pedaling torque can still drive the wheel rotation, thereby improving the start success rate.

Optionally, in the event of a start failure, for example, when the speed remains less than or equal to the preset speed after outputting the assistance torque, the target gear ratio of the assisted bicycle is determined, and gear ratio adjustment prompt information is output to prompt the user to adjust the gear ratio of the assisted bicycle to the target gear ratio; or the gear ratio of the assisted bicycle is adjusted to the target gear ratio based on the target gear ratio. By adjusting the gear ratio, the start success rate of the assisted bicycle can be improved.

Optionally, after the assisted bicycle is balanced, in response to the user's operation, controlling the assistance assembly to continuously output the assistance torque within a preset time period includes: in response to the user pushing the assisted bicycle or triggering the push-bike mode control, controlling the assistance assembly to continuously output the assistance torque within the preset time period. As shown in FIG. 7, after the assistance assembly outputs the balancing torque to maintain the assisted bicycle in balance, in response to the user pushing the assisted bicycle or performing a long press of the push-bike button, the assistance assembly is controlled to continuously output the assistance torque within the preset time period to assist the user in pushing the assisted bicycle forward, thereby reducing the force required by the user to push the assisted bicycle.

Optionally, in response to the speed not exceeding a push-bike speed threshold, the assistance assembly is controlled to continuously output the assistance torque within a preset time period; and in response to the speed exceeding the push-bike speed threshold, the assistance assembly is controlled to stop outputting the assistance torque to prevent the assisted bicycle from moving too fast, which could cause the user to be unable to keep up with the assisted bicycle, resulting in a poor "bicycle pulls user" experience.

As shown in FIG. 7, after the assisted bicycle begins moving and the speed is low, for example, less than or equal to 6 kilometers per hour, the assistance assembly is controlled to continuously output the assistance torque within the preset time period to increase the speed so that it meets the user's needs; when the speed exceeds 6 kilometers per hour, output of the assistance torque is stopped to ensure safe pushing. For example, when the user's pushing speed reaches 6 kilometers per hour, the assistance torque can gradually be reduced to a lower value or even to zero. Optionally, after pushing for a period of time, the assistance torque can be further reduced. For example, maintaining a speed of 4 kilometers per hour may be sufficient. This improves user experience and safety when pushing for a longer duration while preventing excessive speed.

Optionally, when the speed does not exceed the push-bike speed threshold, the closer the speed is to the push-bike speed threshold, the smaller the assistance torque. This prevents a large assistance torque from causing the speed to rise above the push-bike speed threshold in a short time, which could affect user experience or even safety.

In some embodiments, with reference to FIG. 7, when entering the push-bike mode, the assistance motor outputs a balancing torque to prevent the assisted bicycle from rolling backward; after the user performs a long press of the push-bike button or pushes the assisted bicycle, the assistance motor outputs the assistance torque to help the user push the bicycle forward. Optionally, the assisted bicycle can also obtain the current gear ratio and the target gear ratio and output gear ratio adjustment prompt information to prompt the user to adjust the gear ratio of the assisted bicycle to the target gear ratio, or adjust the gear ratio to the target gear ratio based on the target gear ratio. The adjusted gear ratio is more suitable for the push-bike scenario, thereby improving user experience. Optionally, the assisted bicycle can also obtain the current gear ratio and adjust the assistance torque of the assistance motor based on the current gear ratio so that the speed for assisting the user in pushing the bicycle forward can reach approximately 4 km/h.

In some embodiments, the control method of the assisted bicycle can determine the state of the assisted bicycle through a vibration sensor, an attitude sensor, a positioning device, and the like. For example, when the assisted bicycle is powered off, it enters an anti-theft state. In the anti-theft state, the assisted bicycle continuously monitors the vehicle's condition. When the vibration or movement of the vehicle exceeds a predetermined threshold, the assisted bicycle enters an alarm mode; for example, at least one of the display, speaker, buzzer, or assistance motor can output a corresponding alarm; for example, the assistance motor can be controlled to vibrate to generate a buzzer sound, producing a high-volume alarm. The assisted bicycle can also send alarm information to a remote server through a communication module such as a 4G module, and prompt the user via the user terminal to pay attention to vehicle safety. In the alarm state, the movement trajectory of the assisted bicycle can also be recorded on the server to assist the user in locating the bicycle. Optionally, with the help of remote connection functionality, the user can also issue alarm instructions to the vehicle directly through the server, enabling anti-theft and remote tracking functions.

In some embodiments, the control method of the assisted bicycle can also provide richer riding and exercise data display. For example, the assisted bicycle can acquire real-time riding data such as the status of the assistance assembly, user riding information, environmental information, health information, and accessory information; the user can set the types of data displayed on the display through a user terminal such as a mobile phone. During riding, the user can effectively obtain information of interest. The assisted bicycle can also provide more convenient network and social sharing functions: with user authorization, the assisted bicycle can record the user's riding data for each trip; the user can easily record moments of interest. Riding data can be synchronized to the cloud or to a terminal such as a mobile phone via a mobile network, creating a riding data profile for the user; the user can also review riding trajectories, speeds, health information, and other content through a terminal such as a mobile phone for secondary creation and sharing.

The control method of the assisted bicycle provided in the above embodiments includes an assisted bicycle equipped with an assistance assembly. The assistance assembly is configured to output assistance torque in response to receiving external power applied to the assisted bicycle. The method includes: obtaining the external power applied to the assisted bicycle; determining the response speed of the assistance assembly based on the power information; and adjusting the relevant information of the assistance torque output by the assistance assembly based on the response speed. By adjusting the corresponding response speed according to the power information to control the assistance assembly, the assistance assembly outputs the assistance torque at a more appropriate time, thereby improving the intelligence of the assistance and the user experience.

With reference to the foregoing embodiments, see FIG. 8. FIG. 8 is a schematic flow diagram of a control method for an assisted bicycle provided in another embodiment of the present application. The assisted bicycle is equipped with an assistance assembly.

With reference to FIG. 8, and also referring to FIG. 6 or FIG. 7, the control method of the assisted bicycle includes steps S210 and S220.

Step S210: In response to the assisted bicycle being in an uphill state and the speed of the assisted bicycle being less than or equal to a preset speed, control the assistance assembly to output a balancing torque; the balancing torque is configured to prevent the assisted bicycle from rolling backward, thereby maintaining balance.

Step S220: After the assisted bicycle is balanced, in response to the user's operation, control the assistance assembly to continuously output the assistance torque within a preset time period. The user's operation includes pedaling the assisted bicycle or triggering the push-bike mode of the assisted bicycle.

In some embodiments, the preset time period includes a first time period and a second time period. During the first time period, external power is applied to the assisted bicycle; during the second time period, no external power is applied to the assisted bicycle. Controlling the assistance assembly to continuously output the assistance torque within the preset time period includes controlling the assistance assembly to output the assistance torque during both the first time period and the second time period.

In some embodiments, the method further includes: in response to the user riding on the assisted bicycle, determining the balancing torque based on the slope of the environment where the assisted bicycle is located, the mass of the assisted bicycle, and the mass of the user.

In some embodiments, the method further includes: determining a target gear ratio of the assisted bicycle based on the slope of the environment where the assisted bicycle is located.

Exemplarily, the method further includes: based on the target gear ratio, outputting gear ratio adjustment prompt information to prompt the user to adjust the gear ratio of the assisted bicycle to the target gear ratio; or adjusting the gear ratio of the assisted bicycle to the target gear ratio based on the target gear ratio.

In some embodiments, the method further includes: in response to the user not riding on the assisted bicycle, determining the balancing torque based on the slope of the environment where the assisted bicycle is located and the mass of the assisted bicycle.

Exemplarily, after the assisted bicycle is balanced, in response to the user's operation, controlling the assistance assembly to continuously output the assistance torque within a preset time period includes: in response to the user pushing the assisted bicycle or triggering the push-bike mode control, controlling the assistance assembly to continuously output the assistance torque within the preset time period.

Exemplarily, controlling the assistance assembly to continuously output the assistance torque within the preset time period includes: controlling the assistance assembly to continuously output the assistance torque within the preset time period based on the speed of the assisted bicycle.

Exemplarily, controlling the assistance assembly to continuously output the assistance torque within the preset time period based on the speed of the assisted bicycle includes: in response to the speed not exceeding the push-bike speed threshold, controlling the assistance assembly to continuously output the assistance torque within the preset time period; and in response to the speed exceeding the push-bike speed threshold, controlling the assistance assembly to stop outputting the assistance torque.

Exemplarily, when the speed does not exceed the push-bike speed threshold, the closer the speed is to the push-bike speed threshold, the smaller the assistance torque.

Some embodiments of the present application improve the safety of the assisted bicycle by outputting a balancing torque to prevent rollback and maintain balance when the assisted bicycle is in an uphill state and is stationary, preparing to start, or stopped while going uphill. After the assisted bicycle is balanced, in response to the user's operation, the assisted bicycle can also control the assistance assembly to continuously output the assistance torque within a preset time period to assist the forward movement of the assisted bicycle; for example, to increase the speed to a corresponding threshold.

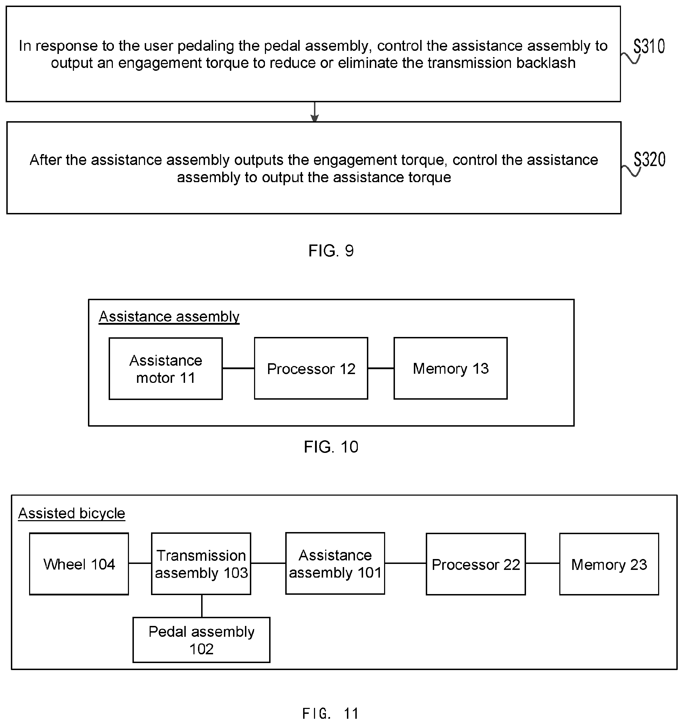

With reference to the foregoing embodiments, see FIG. 9. FIG. 9 is a schematic flow diagram of a control method for an assisted bicycle provided in another embodiment of the present application.

With reference to FIG. 9 and FIG. 5, the assisted bicycle includes an assistance assembly, a pedal assembly, a transmission assembly, and a wheel. Both the assistance assembly and the pedal assembly are connected to the wheel via the transmission assembly. The transmission assembly includes a first transmission member and a second transmission member engaged with the first transmission member; a transmission backlash exists between the first transmission member and the second transmission member.

The control method of the assisted bicycle includes steps S310 and S320.
Step S310: In response to the user pedaling the pedal assembly, control the assistance assembly to output an engagement torque to reduce or eliminate the transmission backlash; and
Step S320: After the assistance assembly outputs the engagement torque, control the assistance assembly to output the assistance torque.

In some embodiments, the transmission assembly includes a chainring, a chain, and a hub. The transmission backlash includes the backlash between the chainring and the chain and/or the backlash between the chainring and the hub.

In some embodiments, the assistance assembly includes an assistance motor; the assistance motor is configured to provide the engagement torque. The method further includes: determining whether the transmission backlash has been reduced or eliminated based on the rotational speed of the assistance motor, the rotational speed of the wheel, and the gear ratio of the assisted bicycle.

Exemplarily, determining whether the transmission backlash has been reduced or eliminated based on the rotational speed of the assistance motor, the rotational speed of the wheel, and the gear ratio of the assisted bicycle includes: in response to the rotational speed of the assistance motor, the rotational speed of the wheel, and the gear ratio of the assisted bicycle satisfying a preset engagement condition, determining that the transmission backlash has been eliminated; and in response to the rotational speed of the assistance motor, the rotational speed of the wheel, and the gear ratio of the assisted bicycle not satisfying the preset engagement condition, determining that the transmission backlash has not been eliminated.

In some embodiments, the engagement torque includes a first engagement torque and a second engagement torque. The method further includes: in response to the transmission assembly having the transmission backlash, controlling the assistance motor to output the first engagement torque to reduce or eliminate the transmission backlash; and in response to the transmission backlash being reduced or eliminated, controlling the assistance motor to output the second engagement torque to maintain the current state of the transmission assembly, where the first engagement torque is different from the second engagement torque.

Exemplarily, the first engagement torque is greater than the second engagement torque.

Some embodiments of the present application can detect the user's pedaling of the pedal assembly via a pedaling frequency sensor and/or a torque sensor. Upon detecting the user's pedaling action, the assistance assembly is first controlled to output the engagement torque to reduce or eliminate the transmission backlash. For example, the engagement torque is smaller than the assistance torque; only after the transmission backlash is reduced or eliminated is the assistance torque output to assist the user's riding, thereby reducing the large impact of the assistance torque on the transmission assembly. The assistance torque, together with the user's pedaling torque, drives the wheel, making the start of riding faster and smoother.

With reference to the foregoing embodiments, see FIG. 10. FIG. 10 is a schematic block diagram of the assistance assembly of an assisted bicycle provided in an embodiment of the present application.

The assistance assembly of the assisted bicycle is configured within the assisted bicycle to perform the above-described control method of the assisted bicycle.

As shown in FIG. 10, the assistance assembly of the assisted bicycle includes an assistance motor 11, one or more processors 12, and one or more memories 13 storing computer program code. The one or more processors 12 and the one or more memories 13 storing computer program codes are configured to cooperate so that the assistance assembly 11 executes the steps of the control method according to any of the foregoing embodiments.

In some embodiments, the one or more processors 12 and the one or more memories 13 storing computer program codes are configured to cooperate so that the assistance assembly 11 performs the following steps:
obtaining power information applied to an assisted bicycle from the outside;
determining a response speed of an assistance assembly based on the power information; and
adjusting relevant information of an assistance torque output by the assistance assembly based on the response speed.

In some embodiments, the one or more processors 12 and the one or more memories 13 storing computer program codes are configured to cooperate so that the assistance assembly 11 performs the following steps:
In response to the assisted bicycle being in an uphill state and the speed of the assisted bicycle being less than or equal to a preset speed, controlling the assistance assembly to output a balancing torque; the balancing torque is configured to prevent the assisted bicycle from rolling backward and to maintain balance; and
After the assisted bicycle is balanced, in response to the user's operation, controlling the assistance assembly to continuously output the assistance torque within a preset time period; the user's operation includes pedaling the assisted bicycle or triggering the push-bike mode of the assisted bicycle.

In some embodiments, the one or more processors 12 and the one or more memories 13 storing computer program codes are configured to cooperate so that the assistance assembly 11 performs the following steps:
In response to the user pedaling the pedal assembly, controlling the assistance assembly to output an engagement torque to reduce or eliminate the transmission backlash; and
After the assistance assembly outputs the engagement torque, controlling the assistance assembly to output the assistance torque.

The specific principles and implementation of the assistance assembly provided in this embodiment of the present application are similar to the control method in the foregoing embodiments and will not be repeated herein.

With reference to the foregoing embodiments, see FIG. 11. FIG. 11 is a schematic block diagram of an assisted bicycle provided in an embodiment of the present application.

The assisted bicycle includes an assistance assembly 101, a pedal assembly 102, a transmission assembly 103, and a wheel(s) 104. Both the assistance assembly 101 and the pedal assembly 102 are connected to the wheel 104 via the transmission assembly 103.

The assisted bicycle further includes one or more processors 22 and one or more memories 23 storing computer program code. The one or more processors 22 and the one or more memories 23 storing computer program codes are configured to cooperate so that the assisted bicycle performs the steps of the control method according to any of the foregoing embodiments.

In some embodiments, the one or more processors 22 and the one or more memories 23 storing computer program codes are configured to cooperate so that the assisted bicycle performs the following steps:
obtaining power information applied to the assisted bicycle from the outside;
determining a response speed of an assistance assembly based on the power information; and
adjusting relevant information of an assistance torque output by the assistance assembly based on the response speed.

In some embodiments, the one or more processors 22 and the one or more memories 23 storing computer program codes are configured to cooperate so that the assisted bicycle performs the following steps:
In response to the assisted bicycle being in an uphill state and the speed of the assisted bicycle being less than or equal to a preset speed, controlling the assistance assembly to output a balancing torque; the balancing torque is configured to prevent the assisted bicycle from rolling backward and to maintain balance; and
After the assisted bicycle is balanced, in response to the user's operation, controlling the assistance assembly to continuously output the assistance torque within a preset time period; the user's operation includes pedaling the assisted bicycle or triggering the push-bike mode of the assisted bicycle.

In some embodiments, the one or more processors 22 and the one or more memories 23 storing computer program codes are configured to cooperate so that the assisted bicycle performs the following steps:
In response to the user pedaling the pedal assembly, controlling the assistance assembly to output an engagement torque to reduce or eliminate the transmission backlash; and
After the assistance assembly outputs the engagement torque, controlling the assistance assembly to output the assistance torque.

The specific principles and implementations of the assisted bicycle provided in this embodiment of the present application are similar to the control methods in the foregoing embodiments and will not be repeated herein.

It should be noted that a person skilled in the art can understand that, for the sake of convenience and conciseness of description, the specific operation processes of the above-described device and each module or unit may refer to the corresponding processes in the method embodiments described above and will not be repeated herein.

The methods of the present application can be applied in numerous general-purpose or special-purpose computer system environments or configurations. For example: handheld or portable devices, multi-processor systems, microprocessor-based systems, programmable consumer electronics devices, distributed computing environments including any of the foregoing systems or devices, and so on. The present application can be described in the general context of computer-executable instructions executed by a computer, such as program modules. Generally, program modules include routines, programs, objects, components, data structures, and so forth, that perform particular tasks or implement particular abstract data types. The present application can also be practiced in distributed computing environments. In these distributed computing environments, tasks are performed by remote processing devices connected through a communications network. In distributed computing environments, program modules may reside on local and remote computer storage media, including memory storage devices.

Exemplarily, the above-described methods and devices can be implemented in the form of a computer program. The computer program can run on the assisted bicycle, for example, on the assistance assembly of the assisted bicycle.

A person skilled in the art can understand that the structures shown in FIG. 10 or FIG. 11 are merely block diagrams of portions of the structure related to the solution of the present application and do not constitute a limitation on the specific assisted bicycle or assistance assembly to which the present application is applied. The assisted bicycle or assistance assembly may include more or fewer components than those shown, or may combine certain components, or may have a different component arrangement.

It should be understood that the processor may be a Central Processing Unit (CPU); the processor may also be other general-purpose processors, Digital Signal Processors (DSP), Application Specific Integrated Circuits (ASIC), Field-Programmable Gate Arrays (FPGA), or other programmable logic devices, discrete gates or transistor logic devices, discrete hardware components, and so on. Among these, a general-purpose processor may be a microprocessor, or the processor may be any conventional processor.

It should be noted that a person skilled in the art can understand that, for the sake of convenience and conciseness of description, the specific operation processes of the assisted bicycle or assistance assembly described above may refer to the corresponding processes in the method embodiments of the assisted bicycle control described above and will not be repeated herein.

Some embodiments of the present application also provide a computer-readable storage medium. The computer-readable storage medium stores a computer program. When the computer program is executed by a processor, the method implemented can refer to any of the embodiments of the assisted bicycle control method of the present application.

The computer-readable storage medium may be an internal storage unit of the assistance assembly or the assisted bicycle as described in the foregoing embodiments, for example, a hard drive or memory of the assisted bicycle. The computer-readable storage medium may also be an external storage device of the assistance assembly or the assisted bicycle, for example, a plug-in hard drive, Smart Media Card (SMC), Secure Digital (SD) card, flash card, or the like, provided on the assisted bicycle.

It should be understood that the terms used in this specification of the present application are solely for the purpose of describing particular embodiments and are not intended to limit the present application. As used in this specification and the appended claims, unless the context clearly indicates otherwise, the singular forms "one," "a," and "the" are intended to include the plural forms.

It should also be understood that the term "and/or" used in this specification and the appended claims refers to any combination of one or more of the listed items and all possible combinations, and includes these combinations. It should be noted that, as used herein, the terms "include," "comprise," or any of their variants are intended to cover non-exclusive inclusion, such that a process, method, article, or system that includes a series of elements does not only include those elements but also includes other elements not explicitly listed, or elements inherent to such a process, method, article, or system. Without further limitation, an element defined by the statement "including one..." does not preclude the existence of additional identical elements in the process, method, article, or system that includes that element.

The numbering of the embodiments in the present application is solely for description and does not represent any ranking of the embodiments. The foregoing descriptions are only specific embodiments of the present application, and the protection scope of the present application is not limited thereto. A person skilled in the art, within the technical scope disclosed in the present application, can easily conceive of various equivalent modifications or substitutions, and these modifications or substitutions should be encompassed within the protection scope of the present application. Therefore, the protection scope of the present application should be defined by the scope of the claims.

## Claims

1. A control method for an assisted bicycle, the assisted bicycle being provided with an assistance assembly, the assistance assembly being configured to output an assistance torque in response to a power applied from outside to the assisted bicycle, **characterized in that** the method comprises:
obtaining power information applied to the assisted bicycle from the outside;
determining a response speed of the assistance assembly based on the power information; and
adjusting relevant information of the assistance torque output by the assistance assembly based on the response speed.

2. The method according to claim 1, **characterized in that** the assisted bicycle comprises a pedal assembly, and the power information comprises power information of a user acting on the pedal assembly.

3. The method according to claim 2, **characterized in that** the power information comprises a user's pedaling frequency and/or pedaling torque.

4. The method according to claim 3, **characterized in that** the power information comprises the pedaling frequency, the method further comprising:
in response to the pedaling frequency being greater than or equal to a pedaling frequency threshold, controlling the assistance assembly to output the assistance torque.

5. The method according to claim 4, **characterized in that** the method further comprises:
in response to the pedaling frequency being less than the pedaling frequency threshold, controlling the assistance assembly to stop outputting the assistance torque.

6. The method according to claim 4, **characterized in that** the power information further comprises the pedaling torque, and the controlling the assistance assembly to output the assistance torque in response to the pedaling frequency being greater than or equal to the pedaling frequency threshold comprises:
in response to the pedaling frequency being greater than or equal to the pedaling frequency threshold and the pedaling torque being greater than or equal to a pedaling torque threshold, controlling the assistance assembly to output the assistance torque.

7. The method according to claim 3, **characterized in that** the power information comprises the pedaling frequency, the lower the pedaling frequency, the faster the response speed; the higher the pedaling frequency, the slower the response speed.

8. The method according to claim 1, **characterized in that** the response speed is used to characterize a length of a time interval between outputting the assistance torque by the assistance assembly and detection of the power information applied to the assisted bicycle from the outside.

9. The method according to any one of claims 2-8, **characterized in that** the method further comprises:
obtaining an assistance ratio of the assisted bicycle, the assistance ratio being used to indicate a ratio of the assistance torque provided by the assistance assembly to the user's pedaling torque;
the relevant information for adjusting the output of the assistance torque by the assistance assembly based on the response speed comprises:
adjusting the relevant information for the output of the assistance torque by the assistance assembly based on the response speed and the assistance ratio.

10. The method according to claim 9, **characterized in that** the obtaining the assistance ratio of the assisted bicycle comprises:
obtaining a slope of an environment in which the assisted bicycle is currently located; and
determining the assistance ratio of the assisted bicycle based on the slope.

11. The method according to claim 10, **characterized in that** the slope is determined based on at least one of the following information: attitude information of the assisted bicycle, map information of the environment in which the assisted bicycle is currently located, and environmental sensor information of the assisted bicycle.

12. The method according to claim 9, **characterized in that** the assisted bicycle comprises a fixed assistance mode, and in response to the assisted bicycle being in the fixed assistance mode, the assistance ratio is a fixed value, wherein the obtaining the assistance ratio of the assisted bicycle comprises:
obtaining the fixed assistance mode; and
determining the assistance ratio based on the fixed assistance mode.

13. The method according to claim 12, **characterized in that** the fixed assistance mode comprises a first fixed assistance mode and a second fixed assistance mode, and the fixed value comprises a first fixed value and a second fixed value;
in response to the assisted bicycle being in the first fixed assistance mode, the assistance ratio is the first fixed value;
in response to the assisted bicycle being in the second fixed assistance mode, the assistance ratio is the second fixed value, wherein the first fixed value and the second fixed value are different.

14. The method according to claim 13, **characterized in that** the first fixed assistance mode or the second fixed assistance mode is determined based on a terrain of the environment in which the assisted bicycle is located.

15. The method according to claim 9, **characterized in that** the obtaining the assistance ratio of the assisted bicycle comprises:
obtaining the user's preset riding information, the preset riding information comprising at least one of a preset riding distance, a preset riding condition, and the a battery level of the assisted bicycle; and
determining the assistance ratio as a first assistance ratio based on the preset riding information.

16. The method according to claim 15, **characterized in that** the method further comprises:
in response to an estimated remaining battery level after completing the preset riding distance with a current battery level being greater than a battery threshold, determining the assistance ratio as a second assistance ratio; and
in response to the estimated remaining battery level after completing the preset riding distance with the current battery level being less than the battery threshold, determining the assistance ratio as a third assistance ratio, wherein
the second assistance ratio is greater than the first assistance ratio, and the third assistance ratio is less than the first assistance ratio.

17. The method according to claim 16, **characterized in that** the battery threshold comprises a first battery threshold and a second battery threshold, the first battery threshold being greater than the second battery threshold, wherein the determining the assistance ratio as the second assistance ratio in response to the estimated remaining battery level after completing the preset riding distance being greater than the battery threshold, and the determining the assistance ratio as the third assistance ratio in response to the estimated remaining battery level after completing the preset riding distance being less than the battery threshold, comprises:
in response to the estimated remaining battery level after completing the preset riding distance being greater than the first battery threshold, determining the assistance ratio as the second assistance ratio;
in response to the estimated remaining battery level after completing the preset riding distance being less than the second battery threshold, determining the assistance ratio as the third assistance ratio; and
in response to the estimated remaining battery level after completing the preset riding distance being greater than the second battery threshold and less than the first battery threshold, determining the assistance ratio as the first assistance ratio.

18. The method according to claim 1, **characterized in that** the power information comprises bicycle speed information of the assisted bicycle caused by a pulling force, pushing force, or gravity.

19. The method according to claim 1, **characterized in that** the method further comprises:
obtaining a slope of an environment in which the assisted bicycle is currently located; and
determining an assistance power upper limit of the assistance assembly based on the slope.

20. The method according to claim 1, **characterized in that** the method further comprises:
obtaining a slope of an environment in which the assisted bicycle is currently located; and
determining an assistance torque upper limit of the assistance assembly based on the slope.

21. The method according to claim 1, **characterized in that** the method further comprises:
obtaining a gear ratio of the assisted bicycle; and
determining the assistance torque upper limit of the assistance assembly based on the gear ratio.

22. The method according to claim 1, **characterized in that** the method further comprises:
obtaining a speed of the assisted bicycle;
in response to the speed of the assisted bicycle being greater than a speed threshold, controlling the assistance assembly to stop outputting the assistance torque.

23. The method according to claim 1, **characterized in that** the method further comprises:
in response to a user triggering a trigger member, increasing an assistance power upper limit and/or an assistance torque upper limit of the assistance assembly.

24. The method according to claim 23, **characterized in that** the increasing the assistance power upper limit and/or the assistance torque upper limit of the assistance assembly in response to the user triggering the trigger member comprises:
in response to the user triggering the trigger member, increasing the assistance power upper limit and/or the assistance torque upper limit of the assistance assembly within a preset time period.

25. The method according to any one of claims 1-24, **characterized in that** the method further comprises:
obtaining a current gear ratio of the assisted bicycle;
outputting prompt information for adjusting the current gear ratio based on state information of the assistance assembly to prompt the user to adjust the current gear ratio and/or controlling the assisted bicycle to adjust the current gear ratio.

26. The method according to claim 25, **characterized in that** the state information comprises a rotational speed and/or assistance torque of the assistance assembly.

27. The method according to claim 26, **characterized in that** the outputting prompt information for adjusting the current gear ratio based on the state information of the assistance assembly to prompt the user to adjust the current gear ratio and/or controlling the assisted bicycle to adjust the current gear ratio comprises:
in response to the rotational speed of the assistance assembly being outside a rotational speed range and/or in response to the assistance torque of the assistance assembly being outside an assistance torque range, outputting prompt information for adjusting the current gear ratio to prompt the user to adjust the current gear ratio and/or controlling the assisted bicycle to adjust the current gear ratio.

28. The method according to claim 25, **characterized in that** the assisted bicycle comprises a wheel and a crank, the assistance assembly comprises an assistance motor, the crank is configured to transmit the user's pedaling torque to drive the wheel, and the assistance motor is configured to output the assistance torque to drive the wheel, wherein the obtaining the current gear ratio of the assisted bicycle comprises:
determining the current gear ratio of the assisted bicycle based on a rotational speed of the assistance motor and a rotational speed of the wheel; and/or
determining the current gear ratio of the assisted bicycle based on the rotational speed of the crank and the rotational speed of the wheel.

29. The method according to claim 28, **characterized in that** the determining the current gear ratio of the assisted bicycle based on the rotational speed of the assistance motor and the rotational speed of the wheel comprises:
in response to the assistance motor outputting the assistance torque, determining the current gear ratio of the assisted bicycle based on the rotational speed of the assistance motor and the rotational speed of the wheel.

30. The method according to claim 25, **characterized in that** the method further comprises:
outputting the gear ratio of the assisted bicycle and/or a gear corresponding to the gear ratio.

31. The method according to any one of claims 1-30, **characterized in that** the assisted bicycle further comprises a pedal assembly, a transmission assembly, and a wheel, the assistance assembly and the pedal assembly being connected to the wheel via the transmission assembly, the transmission assembly comprising a first transmission member and a second transmission member in cooperation with the first transmission member, a transmission backlash existing between the first transmission member and the second transmission member, the method comprising:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

32. The method according to claim 31, **characterized in that** the transmission assembly comprises a chainring, a chain, and a hub, and the transmission backlash comprises the backlash between the chainring and the chain and/or the backlash between the chainring and the hub.

33. The method according to claim 31, **characterized in that** the assistance assembly comprises an assistance motor, the assistance motor being configured to provide the engagement torque, the method further comprising:
determining whether the transmission backlash has been reduced or eliminated based on the rotational speed of the assistance motor, the rotational speed of the wheel, and the gear ratio of the assisted bicycle.

34. The method according to claim 33, **characterized in that** the determining whether the transmission backlash has been reduced or eliminated based on the rotational speed of the assistance motor, the rotational speed of the wheel, and the gear ratio of the assisted bicycle comprises:
in response to the rotational speed of the assistance motor, the rotational speed of the wheel and the gear ratio of the assisted bicycle satisfying a preset engagement condition, determining that the transmission backlash has been eliminated;
in response to the rotational speed of the assistance motor, the rotational speed of the wheel, and the gear ratio of the assisted bicycle not satisfying the preset engagement condition, determining that the transmission backlash has not been eliminated.

35. The method according to claim 31, **characterized in that** the engagement torque comprises a first engagement torque and a second engagement torque, the method further comprising:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque so that the transmission assembly maintains its current state, wherein
the first engagement torque is different from the second engagement torque.

36. The method according to claim 35, **characterized in that** the first engagement torque is greater than the second engagement torque.

37. The method according to any one of claims 1-36, **characterized in that** the method further comprises:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance.

38. The method according to claim 37, **characterized in that** the method further comprises:
after the assisted bicycle maintains balance, in response to a user operation, controlling the assistance assembly to continuously output the assistance torque within a preset time period, the user operation comprising the user pedaling the pedals of the assisted bicycle or triggering a push-bike mode of the assisted bicycle.

39. The method according to claim 38, **characterized in that** the preset time period comprises a first time period and a second time period, the power externally applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

40. The method according to claim 37, **characterized in that** the method further comprises:
in response to a user riding on the assisted bicycle, determining the balancing torque based on the slope of the environment in which the assisted bicycle is located, the mass of the assisted bicycle, and the mass of the user.

41. The method according to claim 37, **characterized in that** the method further comprises:
determining a target gear ratio of the assisted bicycle based on the slope of the environment in which the assisted bicycle is located.

42. The method according to claim 41, **characterized in that** the method further comprises:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

43. The method according to claim 37, **characterized in that** the method further comprises:
in response to the user not riding on the assisted bicycle, determining the balancing torque based on the slope of the environment in which the assisted bicycle is located and a mass of the assisted bicycle.

44. The method according to claim 38, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

45. The method according to claim 44, **characterized in that** the controlling the assistance assembly to continuously output the assistance torque within the preset time period comprises:
controlling the assistance assembly to continuously output the assistance torque within the preset time period based on the speed of the assisted bicycle.

46. The method according to claim 45, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

47. The method according to claim 46, **characterized in that** when the speed does not exceed the push-bike speed threshold, the closer the speed is to the push-bike speed threshold, the smaller the assistance torque.

48. A control method for an assisted bicycle, the assisted bicycle being provided with an assistance assembly, **characterized in that** the method comprises:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
after the assisted bicycle maintains balance, in response to a user operation, controlling the assistance assembly to continuously output an assistance torque within a preset time period, the user operation comprising the user pedaling the pedals of the assisted bicycle or triggering the push-bike mode of the assisted bicycle.

49. The method according to claim 48, **characterized in that** the preset time period comprises a first time period and a second time period, external power applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

50. The method according to claim 47, **characterized in that** the method further comprises:
in response to a user riding on the assisted bicycle, determining the balancing torque based on a slope of an environment in which the assisted bicycle is located, a mass of the assisted bicycle, and a mass of the user.

51. The method according to claim 47, **characterized in that** the method further comprises:
determining a target gear ratio of the assisted bicycle based on the slope of the environment in which the assisted bicycle is located.

52. The method according to claim 51, **characterized in that** the method further comprises:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

53. The method according to claim 47, **characterized in that** the method further comprises:
in response to the user not riding on the assisted bicycle, determining the balancing torque based on the slope of the environment in which the assisted bicycle is located and the mass of the assisted bicycle.

54. The method according to claim 48, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

55. The method according to claim 54, **characterized in that** the controlling the assistance assembly to continuously output the assistance torque within the preset time period comprises:
controlling the assistance assembly to continuously output the assistance torque within the preset time period based on the speed of the assisted bicycle.

56. The method according to claim 55, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

57. The method according to claim 56, **characterized in that** when the speed does not exceed the push-bike speed threshold, the closer the speed is to the push-bike speed threshold, the smaller the assistance torque.

58. A control method for an assisted bicycle, **characterized in that** the assisted bicycle comprises an assistance assembly, a pedal assembly, a transmission assembly, and a wheel, the assistance assembly and the pedal assembly being connected to the wheel via the transmission assembly, the transmission assembly comprising a first transmission member and a second transmission member in cooperation with the first transmission member, a transmission backlash existing between the first transmission member and the second transmission member, the method further comprising:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

59. The method according to claim 58, **characterized in that** the transmission assembly comprises a chainring, a chain, and a hub, and the transmission backlash comprises backlash between the chainring and the chain and/or backlash between the chainring and the hub.

60. The method according to claim 58, **characterized in that** the assistance assembly comprises an assistance motor, the assistance motor being configured to provide the engagement torque, the method further comprising:
determining whether the transmission backlash has been reduced or eliminated based on the rotational speed of the assistance motor, the rotational speed of the wheel, and the gear ratio of the assisted bicycle.

61. The method according to claim 60, **characterized in that** the determining whether the transmission backlash has been reduced or eliminated based on the rotational speed of the assistance motor, the rotational speed of the wheel, and the gear ratio of the assisted bicycle comprises:
in response to a rotational speed of the assistance motor, a rotational speed of the wheel, and a gear ratio of the assisted bicycle satisfying a preset engagement condition, determining that the transmission backlash has been eliminated; and
in response to the rotational speed of the assistance motor, the rotational speed of the wheel, and the gear ratio of the assisted bicycle not satisfying the preset engagement condition, determining that the transmission backlash has not been eliminated.

62. The method according to claim 58, **characterized in that** the engagement torque comprises a first engagement torque and a second engagement torque, the method further comprising:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque such that the transmission assembly maintains a current state, wherein
the first engagement torque is different from the second engagement torque.

63. The method according to claim 62, **characterized in that** the first engagement torque is greater than the second engagement torque.

64. An assistance assembly of an assisted bicycle, **characterized in that** the assistance assembly comprises an assistance motor, one or more processors, and one or more memories storing computer program codes, wherein the one or more processors and the one or more memories storing computer program codes are configured to cooperate such that the assistance assembly performs the following steps:
obtaining power information applied to the assisted bicycle from outside;
determining a response speed of the assistance assembly based on the power information; and
adjusting relevant information of the assistance torque output by the assistance assembly based on the response speed.

65. The assistance assembly according to claim 64, **characterized in that** the assisted bicycle comprises a pedal assembly, and the power information comprises power information of a user acting on the pedal assembly.

66. The assistance assembly according to claim 65, **characterized in that** the power information comprises a user's pedaling frequency and/or pedaling torque.

67. The assistance assembly according to claim 66, **characterized in that** the power information comprises the pedaling frequency, the assistance assembly further comprising:
in response to the pedaling frequency being greater than or equal to a pedaling frequency threshold, controlling the assistance assembly to output the assistance torque.

68. The assistance assembly according to claim 67, **characterized in that** the processor(s) is further configured to perform:
in response to the pedaling frequency being less than the pedaling frequency threshold, controlling the assistance assembly to stop outputting the assistance torque.

69. The assistance assembly according to claim 67, **characterized in that** the power information further comprises the pedaling torque, and the controlling the assistance assembly to output the assistance torque in response to the pedaling frequency being greater than or equal to the pedaling frequency threshold comprises:
in response to the pedaling frequency being greater than or equal to the pedaling frequency threshold and the pedaling torque being greater than or equal to a pedaling torque threshold, controlling the assistance assembly to output the assistance torque.

70. The assistance assembly according to claim 66, **characterized in that** the power information comprises the pedaling frequency, the lower the pedaling frequency, the faster the response speed; the higher the pedaling frequency, the slower the response speed.

71. The assistance assembly according to claim 64, **characterized in that** the response speed is used to characterize a length of a time interval between outputting the assistance torque by the assistance assembly and detection of the power information applied to the assisted bicycle from the outside.

72. The assistance assembly according to any one of claims 65-71, **characterized in that** the processor(s) is further configured to perform:
obtaining an assistance ratio of the assisted bicycle, the assistance ratio being used to indicate a ratio of the assistance torque provided by the assistance assembly to the user's pedaling torque;
the relevant information for adjusting the output of the assistance torque by the assistance assembly based on the response speed comprises:
adjusting the relevant information for the output of the assistance torque by the assistance assembly based on the response speed and the assistance ratio.

73. The assistance assembly according to claim 72, **characterized in that** the obtaining the assistance ratio of the assisted bicycle comprises:
obtaining a slope of an environment in which the assisted bicycle is currently located; and
determining the assistance ratio of the assisted bicycle based on the slope.

74. The assistance assembly according to claim 73, **characterized in that** the slope is determined based on at least one of the following information: attitude information of the assisted bicycle, map information of the environment in which the assisted bicycle is currently located, and environmental sensor information of the assisted bicycle.

75. The assistance assembly according to claim 72, **characterized in that** the assisted bicycle comprises a fixed assistance mode, and in response to the assisted bicycle being in the fixed assistance mode, the assistance ratio is a fixed value, wherein the obtaining the assistance ratio of the assisted bicycle comprises:
obtaining the fixed assistance mode; and
determining the assistance ratio based on the fixed assistance mode.

76. The assistance assembly according to claim 75, **characterized in that** the fixed assistance mode comprises a first fixed assistance mode and a second fixed assistance mode, and the fixed value comprises a first fixed value and a second fixed value;
in response to the assisted bicycle being in the first fixed assistance mode, the assistance ratio is the first fixed value;
in response to the assisted bicycle being in the second fixed assistance mode, the assistance ratio is the second fixed value, wherein the first fixed value and the second fixed value are different.

77. The assistance assembly according to claim 76, **characterized in that** the first fixed assistance mode or the second fixed assistance mode is determined based on a terrain of the environment in which the assisted bicycle is located.

78. The assistance assembly according to claim 72, **characterized in that** the obtaining the assistance ratio of the assisted bicycle comprises:
obtaining the user's preset riding information, the preset riding information comprising at least one of a preset riding distance, a preset riding condition, and the a battery level of the assisted bicycle; and
determining the assistance ratio as a first assistance ratio based on the preset riding information.

79. The assistance assembly according to claim 78, **characterized in that** the processor(s) is further configured to perform:
in response to an estimated remaining battery level after completing the preset riding distance with a current battery level being greater than a battery threshold, determining the assistance ratio as a second assistance ratio; and
in response to the estimated remaining battery level after completing the preset riding distance with the current battery level being less than the battery threshold, determining the assistance ratio as a third assistance ratio, wherein
the second assistance ratio is greater than the first assistance ratio, and the third assistance ratio is less than the first assistance ratio.

80. The assistance assembly according to claim 79, **characterized in that** the battery threshold comprises a first battery threshold and a second battery threshold, the first battery threshold being greater than the second battery threshold, wherein the determining the assistance ratio as the second assistance ratio in response to the estimated remaining battery level after completing the preset riding distance being greater than the battery threshold, and the determining the assistance ratio as the third assistance ratio in response to the estimated remaining battery level after completing the preset riding distance being less than the battery threshold, comprises:
in response to the estimated remaining battery level after completing the preset riding distance being greater than the first battery threshold, determining the assistance ratio as the second assistance ratio;
in response to the estimated remaining battery level after completing the preset riding distance being less than the second battery threshold, determining the assistance ratio as the third assistance ratio; and
in response to the estimated remaining battery level after completing the preset riding distance being greater than the second battery threshold and less than the first battery threshold, determining the assistance ratio as the first assistance ratio.

81. The assistance assembly according to claim 64, **characterized in that** the power information comprises bicycle speed information of the assisted bicycle caused by a pulling force, pushing force, or gravity.

82. The assistance assembly according to claim 64, **characterized in that** the processor(s) is further configured to perform:
obtaining a slope of an environment in which the assisted bicycle is currently located; and
determining an assistance power upper limit of the assistance assembly based on the slope.

83. The assistance assembly according to claim 64, **characterized in that** the processor(s) is further configured to perform:
obtaining a slope of an environment in which the assisted bicycle is currently located; and
determining an assistance torque upper limit of the assistance assembly based on the slope.

84. The assistance assembly according to claim 64, **characterized in that** the processor(s) is further configured to perform:
obtaining a gear ratio of the assisted bicycle; and
determining the assistance torque upper limit of the assistance assembly based on the gear ratio.

85. The assistance assembly according to claim 64, **characterized in that** the processor(s) is further configured to perform:
obtaining a speed of the assisted bicycle;
in response to the speed of the assisted bicycle being greater than a speed threshold, controlling the assistance assembly to stop outputting the assistance torque.

86. The assistance assembly according to claim 64, **characterized in that** the processor(s) is further configured to perform:
in response to a user triggering a trigger member, increasing an assistance power upper limit and/or an assistance torque upper limit of the assistance assembly.

87. The assistance assembly according to claim 86, **characterized in that** the increasing the assistance power upper limit and/or the assistance torque upper limit of the assistance assembly in response to the user triggering the trigger member comprises:
in response to the user triggering the trigger member, increasing the assistance power upper limit and/or the assistance torque upper limit of the assistance assembly within a preset time period.

88. The assistance assembly according to any one of claims 64-87, **characterized in that** the processor(s) is further configured to perform:
obtaining a current gear ratio of the assisted bicycle;
outputting prompt information for adjusting the current gear ratio based on state information of the assistance assembly to prompt the user to adjust the current gear ratio and/or controlling the assisted bicycle to adjust the current gear ratio.

89. The assistance assembly according to claim 88, **characterized in that** the state information comprises a rotational speed and/or assistance torque of the assistance assembly.

90. The assistance assembly according to claim 89, **characterized in that** the outputting prompt information for adjusting the current gear ratio based on the state information of the assistance assembly to prompt the user to adjust the current gear ratio and/or controlling the assisted bicycle to adjust the current gear ratio comprises:
in response to the rotational speed of the assistance assembly being outside a rotational speed range and/or in response to the assistance torque of the assistance assembly being outside an assistance torque range, outputting prompt information for adjusting the current gear ratio to prompt the user to adjust the current gear ratio and/or controlling the assisted bicycle to adjust the current gear ratio.

91. The assistance assembly according to claim 88, **characterized in that** the assisted bicycle comprises a wheel and a crank, the assistance assembly comprises an assistance motor, the crank is configured to transmit the user's pedaling torque to drive the wheel, and the assistance motor is configured to output the assistance torque to drive the wheel, wherein the obtaining the current gear ratio of the assisted bicycle comprises:
determining the current gear ratio of the assisted bicycle based on a rotational speed of the assistance motor and a rotational speed of the wheel; and/or
determining the current gear ratio of the assisted bicycle based on the rotational speed of the crank and the rotational speed of the wheel.

92. The assistance assembly according to claim 91, **characterized in that** the determining the current gear ratio of the assisted bicycle based on the rotational speed of the assistance motor and the rotational speed of the wheel comprises:
in response to the assistance motor outputting the assistance torque, determining the current gear ratio of the assisted bicycle based on the rotational speed of the assistance motor and the rotational speed of the wheel.

93. The assistance assembly according to claim 88, **characterized in that** the assistance assembly further comprises:
outputting the gear ratio of the assisted bicycle and/or a gear corresponding to the gear ratio.

94. The assistance assembly according to any one of claims 64-93, **characterized in that** the assisted bicycle further comprises a pedal assembly, a transmission assembly, and a wheel, the assistance assembly and the pedal assembly being connected to the wheel via the transmission assembly, the transmission assembly comprising a first transmission member and a second transmission member in cooperation with the first transmission member, a transmission backlash existing between the first transmission member and the second transmission member, the processor(s) is further configured to perform:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

95. The assistance assembly according to claim 94, **characterized in that** the transmission assembly comprises a chainring, a chain, and a hub, and the transmission backlash comprises the backlash between the chainring and the chain and/or the backlash between the chainring and the hub.

96. The assistance assembly according to claim 94, **characterized in that** the assistance assembly comprises an assistance motor, the assistance motor being configured to provide the engagement torque, the processor(s) is further configured to perform:
determining whether the transmission backlash has been reduced or eliminated based on the rotational speed of the assistance motor, the rotational speed of the wheel, and the gear ratio of the assisted bicycle.

97. The assistance assembly according to claim 96, **characterized in that** the determining whether the transmission backlash has been reduced or eliminated based on the rotational speed of the assistance motor, the rotational speed of the wheel, and the gear ratio of the assisted bicycle comprises:
in response to the rotational speed of the assistance motor, the rotational speed of the wheel and the gear ratio of the assisted bicycle satisfying a preset engagement condition, determining that the transmission backlash has been eliminated;
in response to the rotational speed of the assistance motor, the rotational speed of the wheel, and the gear ratio of the assisted bicycle not satisfying the preset engagement condition, determining that the transmission backlash has not been eliminated.

98. The assistance assembly according to claim 94, **characterized in that** the engagement torque comprises a first engagement torque and a second engagement torque, the processor(s) is further configured to perform:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque so that the transmission assembly maintains its current state, wherein
the first engagement torque is different from the second engagement torque.

99. The assistance assembly according to claim 98, **characterized in that** the first engagement torque is greater than the second engagement torque.

100. The assistance assembly according to any one of claims 64-99, **characterized in that** the processor(s) is further configured to perform:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance.

101. The assistance assembly according to claim 100, **characterized in that** the processor(s) is further configured to perform:
after the assisted bicycle maintains balance, in response to a user operation, controlling the assistance assembly to continuously output the assistance torque within a preset time period, the user operation comprising the user pedaling the pedals of the assisted bicycle or triggering a push-bike mode of the assisted bicycle.

102. The assistance assembly according to claim 101, **characterized in that** the preset time period comprises a first time period and a second time period, the power externally applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

103. The assistance assembly according to claim 100, **characterized in that** the processor(s) is further configured to perform:
in response to a user riding on the assisted bicycle, determining the balancing torque based on the slope of the environment in which the assisted bicycle is located, the mass of the assisted bicycle, and the mass of the user.

104. The assistance assembly according to claim 100, **characterized in that** the processor(s) is further configured to perform:
determining a target gear ratio of the assisted bicycle based on the slope of the environment in which the assisted bicycle is located.

105. The assistance assembly according to claim 104, **characterized in that** the processor(s) is further configured to perform:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

106. The assistance assembly according to claim 100, **characterized in that** the processor(s) is further configured to perform:
in response to the user not riding on the assisted bicycle, determining the balancing torque based on the slope of the environment in which the assisted bicycle is located and a mass of the assisted bicycle.

107. The assistance assembly according to claim 101, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

108. The assistance assembly according to claim 107, **characterized in that** the controlling the assistance assembly to continuously output the assistance torque within the preset time period comprises:
controlling the assistance assembly to continuously output the assistance torque within the preset time period based on the speed of the assisted bicycle.

109. The assistance assembly according to claim 108, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

110. The assistance assembly according to claim 109, **characterized in that** when the speed does not exceed the push-bike speed threshold, the closer the speed is to the push-bike speed threshold, the smaller the assistance torque.

111. An assistance assembly of an assisted bicycle, **characterized in that** the assistance assembly comprises an assistance motor, one or more processors, and one or more memories storing computer program codes, wherein the one or more processors and the one or more memories storing computer program codes are configured to cooperate such that the assistance assembly performs the following steps:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
after the assisted bicycle maintains balance, in response to a user operation, controlling the assistance assembly to continuously output an assistance torque within a preset time period, the user operation comprising the user pedaling the pedals of the assisted bicycle or triggering the push-bike mode of the assisted bicycle.

112. The assistance assembly according to claim 111, **characterized in that** the preset time period comprises a first time period and a second time period, external power applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

113. The assistance assembly according to claim 110, **characterized in that** the processor(s) is further configured to perform:
in response to a user riding on the assisted bicycle, determining the balancing torque based on a slope of an environment in which the assisted bicycle is located, a mass of the assisted bicycle, and a mass of the user.

114. The assistance assembly according to claim 110, **characterized in that** the processor(s) is further configured to perform:
determining a target gear ratio of the assisted bicycle based on the slope of the environment in which the assisted bicycle is located.

115. The assistance assembly according to claim 114, **characterized in that** the processor(s) is further configured to perform:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

116. The assistance assembly according to claim 110, **characterized in that** the processor(s) is further configured to perform:
in response to the user not riding on the assisted bicycle, determining the balancing torque based on the slope of the environment in which the assisted bicycle is located and the mass of the assisted bicycle.

117. The assistance assembly according to claim 111, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

118. The assistance assembly according to claim 117, **characterized in that** the controlling the assistance assembly to continuously output the assistance torque within the preset time period comprises:
controlling the assistance assembly to continuously output the assistance torque within the preset time period based on the speed of the assisted bicycle.

119. The assistance assembly according to claim 118, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

120. The assistance assembly according to claim 119, **characterized in that** when the speed does not exceed the push-bike speed threshold, the closer the speed is to the push-bike speed threshold, the smaller the assistance torque.

121. An assistance assembly of an assisted bicycle, **characterized in that** the assistance assembly comprises an assistance motor, one or more processors, and one or more memories storing computer program codes, wherein the one or more processors and the one or more memories storing computer program codes are configured to cooperate such that the assistance assembly performs the following steps:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

122. The assistance assembly according to claim 121, **characterized in that** the transmission assembly comprises a chainring, a chain, and a hub, and the transmission backlash comprises backlash between the chainring and the chain and/or backlash between the chainring and the hub.

123. The assistance assembly according to claim 121, **characterized in that** the assistance assembly comprises an assistance motor, the assistance motor being configured to provide the engagement torque, the processor(s) is further configured to perform:
determining whether the transmission backlash has been reduced or eliminated based on the rotational speed of the assistance motor, the rotational speed of the wheel, and the gear ratio of the assisted bicycle.

124. The assistance assembly according to claim 123, **characterized in that** the determining whether the transmission backlash has been reduced or eliminated based on the rotational speed of the assistance motor, the rotational speed of the wheel, and the gear ratio of the assisted bicycle comprises:
in response to a rotational speed of the assistance motor, a rotational speed of the wheel, and a gear ratio of the assisted bicycle satisfying a preset engagement condition, determining that the transmission backlash has been eliminated; and
in response to the rotational speed of the assistance motor, the rotational speed of the wheel, and the gear ratio of the assisted bicycle not satisfying the preset engagement condition, determining that the transmission backlash has not been eliminated.

125. The assistance assembly according to claim 121, **characterized in that** the engagement torque comprises a first engagement torque and a second engagement torque, the processor(s) is further configured to perform:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque such that the transmission assembly maintains a current state, wherein
the first engagement torque is different from the second engagement torque.

126. The assistance assembly according to claim 125, **characterized in that** the first engagement torque is greater than the second engagement torque.

127. An assisted bicycle, **characterized in that** the assisted bicycle comprises an assistance assembly, a pedal assembly, a transmission assembly, and a wheel(s), both the assistance assembly and the pedal assembly are connected to the wheel(s) via the transmission assembly;
the assisted bicycle further comprises one or more processors and one or more memories storing computer program codes, wherein the one or more processors and the one or more memories storing computer program codes are configured to cooperate so that the assisted bicycle performs the following steps:
obtaining power information applied to the assisted bicycle from outside;
determining a response speed of the assistance assembly based on the power information; and
adjusting relevant information of the assistance torque output by the assistance assembly based on the response speed.

128. The assistance assembly according to claim 127, **characterized in that** the assisted bicycle comprises a pedal assembly, and the power information comprises power information of a user acting on the pedal assembly.

129. The assistance assembly according to claim 128, **characterized in that** the power information comprises a user's pedaling frequency and/or pedaling torque.

130. The assistance assembly according to claim 129, **characterized in that** the power information comprises the pedaling frequency, the assistance assembly further comprising:
in response to the pedaling frequency being greater than or equal to a pedaling frequency threshold, controlling the assistance assembly to output the assistance torque.

131. The assistance assembly according to claim 130, **characterized in that** the processor(s) is further configured to perform:
in response to the pedaling frequency being less than the pedaling frequency threshold, controlling the assistance assembly to stop outputting the assistance torque.

132. The assistance assembly according to claim 130, **characterized in that** the power information further comprises the pedaling torque, and the controlling the assistance assembly to output the assistance torque in response to the pedaling frequency being greater than or equal to the pedaling frequency threshold comprises:
in response to the pedaling frequency being greater than or equal to the pedaling frequency threshold and the pedaling torque being greater than or equal to a pedaling torque threshold, controlling the assistance assembly to output the assistance torque.

133. The assistance assembly according to claim 129, **characterized in that** the power information comprises the pedaling frequency, the lower the pedaling frequency, the faster the response speed; the higher the pedaling frequency, the slower the response speed.

134. The assistance assembly according to claim 127, **characterized in that** the response speed is used to characterize a length of a time interval between outputting the assistance torque by the assistance assembly and detection of the power information applied to the assisted bicycle from the outside.

135. The assistance assembly according to any one of claims 128-134, **characterized in that** the processor(s) is further configured to perform:
obtaining an assistance ratio of the assisted bicycle, the assistance ratio being used to indicate a ratio of the assistance torque provided by the assistance assembly to the user's pedaling torque;
the relevant information for adjusting the output of the assistance torque by the assistance assembly based on the response speed comprises:
adjusting the relevant information for the output of the assistance torque by the assistance assembly based on the response speed and the assistance ratio.

136. The assistance assembly according to claim 135, **characterized in that** the obtaining the assistance ratio of the assisted bicycle comprises:
obtaining a slope of an environment in which the assisted bicycle is currently located; and
determining the assistance ratio of the assisted bicycle based on the slope.

137. The assistance assembly according to claim 136, **characterized in that** the slope is determined based on at least one of the following information: attitude information of the assisted bicycle, map information of the environment in which the assisted bicycle is currently located, and environmental sensor information of the assisted bicycle.

138. The assistance assembly according to claim 135, **characterized in that** the assisted bicycle comprises a fixed assistance mode, and in response to the assisted bicycle being in the fixed assistance mode, the assistance ratio is a fixed value, wherein the obtaining the assistance ratio of the assisted bicycle comprises:
obtaining the fixed assistance mode; and
determining the assistance ratio based on the fixed assistance mode.

139. The assistance assembly according to claim 138, **characterized in that** the fixed assistance mode comprises a first fixed assistance mode and a second fixed assistance mode, and the fixed value comprises a first fixed value and a second fixed value;
in response to the assisted bicycle being in the first fixed assistance mode, the assistance ratio is the first fixed value;
in response to the assisted bicycle being in the second fixed assistance mode, the assistance ratio is the second fixed value, wherein the first fixed value and the second fixed value are different.

140. The assistance assembly according to claim 139, **characterized in that** the first fixed assistance mode or the second fixed assistance mode is determined based on a terrain of the environment in which the assisted bicycle is located.

141. The assistance assembly according to claim 135, **characterized in that** the obtaining the assistance ratio of the assisted bicycle comprises:
obtaining the user's preset riding information, the preset riding information comprising at least one of a preset riding distance, a preset riding condition, and the a battery level of the assisted bicycle; and
determining the assistance ratio as a first assistance ratio based on the preset riding information.

142. The assistance assembly according to claim 141, **characterized in that** the processor(s) is further configured to perform:
in response to an estimated remaining battery level after completing the preset riding distance with a current battery level being greater than a battery threshold, determining the assistance ratio as a second assistance ratio; and
in response to the estimated remaining battery level after completing the preset riding distance with the current battery level being less than the battery threshold, determining the assistance ratio as a third assistance ratio, wherein
the second assistance ratio is greater than the first assistance ratio, and the third assistance ratio is less than the first assistance ratio.

143. The assistance assembly according to claim 142, **characterized in that** the battery threshold comprises a first battery threshold and a second battery threshold, the first battery threshold being greater than the second battery threshold, wherein the determining the assistance ratio as the second assistance ratio in response to the estimated remaining battery level after completing the preset riding distance being greater than the battery threshold, and the determining the assistance ratio as the third assistance ratio in response to the estimated remaining battery level after completing the preset riding distance being less than the battery threshold, comprises:
in response to the estimated remaining battery level after completing the preset riding distance being greater than the first battery threshold, determining the assistance ratio as the second assistance ratio;
in response to the estimated remaining battery level after completing the preset riding distance being less than the second battery threshold, determining the assistance ratio as the third assistance ratio; and
in response to the estimated remaining battery level after completing the preset riding distance being greater than the second battery threshold and less than the first battery threshold, determining the assistance ratio as the first assistance ratio.

144. The assistance assembly according to claim 127, **characterized in that** the power information comprises bicycle speed information of the assisted bicycle caused by a pulling force, pushing force, or gravity.

145. The assistance assembly according to claim 127, **characterized in that** the processor(s) is further configured to perform:
obtaining a slope of an environment in which the assisted bicycle is currently located; and
determining an assistance power upper limit of the assistance assembly based on the slope.

146. The assistance assembly according to claim 127, **characterized in that** the processor(s) is further configured to perform:
obtaining a slope of an environment in which the assisted bicycle is currently located; and
determining an assistance torque upper limit of the assistance assembly based on the slope.

147. The assistance assembly according to claim 127, **characterized in that** the processor(s) is further configured to perform:
obtaining a gear ratio of the assisted bicycle; and
determining the assistance torque upper limit of the assistance assembly based on the gear ratio.

148. The assistance assembly according to claim 127, **characterized in that** the processor(s) is further configured to perform:
obtaining a speed of the assisted bicycle;
in response to the speed of the assisted bicycle being greater than a speed threshold, controlling the assistance assembly to stop outputting the assistance torque.

149. The assistance assembly according to claim 127, **characterized in that** the processor(s) is further configured to perform:
in response to a user triggering a trigger member, increasing an assistance power upper limit and/or an assistance torque upper limit of the assistance assembly.

150. The assistance assembly according to claim 149, **characterized in that** the increasing the assistance power upper limit and/or the assistance torque upper limit of the assistance assembly in response to the user triggering the trigger member comprises:
in response to the user triggering the trigger member, increasing the assistance power upper limit and/or the assistance torque upper limit of the assistance assembly within a preset time period.

151. The assistance assembly according to any one of claims 127-150, **characterized in that** the processor(s) is further configured to perform:
obtaining a current gear ratio of the assisted bicycle;
outputting prompt information for adjusting the current gear ratio based on state information of the assistance assembly to prompt the user to adjust the current gear ratio and/or controlling the assisted bicycle to adjust the current gear ratio.

152. The assistance assembly according to claim 151, **characterized in that** the state information comprises a rotational speed and/or assistance torque of the assistance assembly.

153. The assistance assembly according to claim 152, **characterized in that** the outputting prompt information for adjusting the current gear ratio based on the state information of the assistance assembly to prompt the user to adjust the current gear ratio and/or controlling the assisted bicycle to adjust the current gear ratio comprises:
in response to the rotational speed of the assistance assembly being outside a rotational speed range and/or in response to the assistance torque of the assistance assembly being outside an assistance torque range, outputting prompt information for adjusting the current gear ratio to prompt the user to adjust the current gear ratio and/or controlling the assisted bicycle to adjust the current gear ratio.

154. The assistance assembly according to claim 151, **characterized in that** the assisted bicycle comprises a wheel and a crank, the assistance assembly comprises an assistance motor, the crank is configured to transmit the user's pedaling torque to drive the wheel, and the assistance motor is configured to output the assistance torque to drive the wheel, wherein the obtaining the current gear ratio of the assisted bicycle comprises:
determining the current gear ratio of the assisted bicycle based on a rotational speed of the assistance motor and a rotational speed of the wheel; and/or
determining the current gear ratio of the assisted bicycle based on the rotational speed of the crank and the rotational speed of the wheel.

155. The assistance assembly according to claim 154, **characterized in that** the determining the current gear ratio of the assisted bicycle based on the rotational speed of the assistance motor and the rotational speed of the wheel comprises:
in response to the assistance motor outputting the assistance torque, determining the current gear ratio of the assisted bicycle based on the rotational speed of the assistance motor and the rotational speed of the wheel.

156. The assistance assembly according to claim 151, **characterized in that** the assistance assembly further comprises:
outputting the gear ratio of the assisted bicycle and/or a gear corresponding to the gear ratio.

157. The assistance assembly according to any one of claims 127-156, **characterized in that** the assisted bicycle further comprises a pedal assembly, a transmission assembly, and a wheel, the assistance assembly and the pedal assembly being connected to the wheel via the transmission assembly, the transmission assembly comprising a first transmission member and a second transmission member in cooperation with the first transmission member, a transmission backlash existing between the first transmission member and the second transmission member, the processor(s) is further configured to perform:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

158. The assistance assembly according to claim 157, **characterized in that** the transmission assembly comprises a chainring, a chain, and a hub, and the transmission backlash comprises the backlash between the chainring and the chain and/or the backlash between the chainring and the hub.

159. The assistance assembly according to claim 157, **characterized in that** the assistance assembly comprises an assistance motor, the assistance motor being configured to provide the engagement torque, the processor(s) is further configured to perform:
determining whether the transmission backlash has been reduced or eliminated based on the rotational speed of the assistance motor, the rotational speed of the wheel, and the gear ratio of the assisted bicycle.

160. The assistance assembly according to claim 159, **characterized in that** the determining whether the transmission backlash has been reduced or eliminated based on the rotational speed of the assistance motor, the rotational speed of the wheel, and the gear ratio of the assisted bicycle comprises:
in response to the rotational speed of the assistance motor, the rotational speed of the wheel and the gear ratio of the assisted bicycle satisfying a preset engagement condition, determining that the transmission backlash has been eliminated;
in response to the rotational speed of the assistance motor, the rotational speed of the wheel, and the gear ratio of the assisted bicycle not satisfying the preset engagement condition, determining that the transmission backlash has not been eliminated.

161. The assistance assembly according to claim 157, **characterized in that** the engagement torque comprises a first engagement torque and a second engagement torque, the processor(s) is further configured to perform:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque so that the transmission assembly maintains its current state, wherein
the first engagement torque is different from the second engagement torque.

162. The assistance assembly according to claim 161, **characterized in that** the first engagement torque is greater than the second engagement torque.

163. The assistance assembly according to any one of claims 127-162, **characterized in that** the processor(s) is further configured to perform:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance.

164. The assistance assembly according to claim 163, **characterized in that** the processor(s) is further configured to perform:
after the assisted bicycle maintains balance, in response to a user operation, controlling the assistance assembly to continuously output the assistance torque within a preset time period, the user operation comprising the user pedaling the pedals of the assisted bicycle or triggering a push-bike mode of the assisted bicycle.

165. The assistance assembly according to claim 164, **characterized in that** the preset time period comprises a first time period and a second time period, the power externally applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

166. The assistance assembly according to claim 163, **characterized in that** the processor(s) is further configured to perform:
in response to a user riding on the assisted bicycle, determining the balancing torque based on the slope of the environment in which the assisted bicycle is located, the mass of the assisted bicycle, and the mass of the user.

167. The assistance assembly according to claim 163, **characterized in that** the processor(s) is further configured to perform:
determining a target gear ratio of the assisted bicycle based on the slope of the environment in which the assisted bicycle is located.

168. The assistance assembly according to claim 167, **characterized in that** the processor(s) is further configured to perform:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

169. The assistance assembly according to claim 163, **characterized in that** the processor(s) is further configured to perform:
in response to the user not riding on the assisted bicycle, determining the balancing torque based on the slope of the environment in which the assisted bicycle is located and a mass of the assisted bicycle.

170. The assistance assembly according to claim 164, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

171. The assistance assembly according to claim 170, **characterized in that** the controlling the assistance assembly to continuously output the assistance torque within the preset time period comprises:
controlling the assistance assembly to continuously output the assistance torque within the preset time period based on the speed of the assisted bicycle.

172. The assistance assembly according to claim 171, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

173. The assistance assembly according to claim 172, **characterized in that** when the speed does not exceed the push-bike speed threshold, the closer the speed is to the push-bike speed threshold, the smaller the assistance torque.

174. An assisted bicycle, **characterized in that** the assisted bicycle comprises an assistance assembly, a pedal assembly, a transmission assembly, and a wheel(s), both the assistance assembly and the pedal assembly are connected to the wheel(s) via the transmission assembly;
the assisted bicycle further comprises one or more processors and one or more memories storing computer program codes, wherein the one or more processors and the one or more memories storing computer program codes are configured to cooperate so that the assisted bicycle performs the following steps:
in response to the assisted bicycle being in an uphill state and a speed of the assisted bicycle being less than or equal to a preset speed, controlling the assistance assembly to output a balancing torque, the balancing torque being used to prevent the assisted bicycle from rolling backward and to maintain balance; and
after the assisted bicycle maintains balance, in response to a user operation, controlling the assistance assembly to continuously output an assistance torque within a preset time period, the user operation comprising the user pedaling the pedals of the assisted bicycle or triggering the push-bike mode of the assisted bicycle.

175. The assistance assembly according to claim 174, **characterized in that** the preset time period comprises a first time period and a second time period, external power applied to the assisted bicycle existing in the first time period and not existing in the second time period, wherein the controlling the assistance assembly to continuously output the assistance torque within the preset time period comprises:
controlling the assistance assembly to output the assistance torque during both the first time period and the second time period.

176. The assistance assembly according to claim 173, **characterized in that** the processor(s) is further configured to perform:
in response to a user riding on the assisted bicycle, determining the balancing torque based on a slope of an environment in which the assisted bicycle is located, a mass of the assisted bicycle, and a mass of the user.

177. The assistance assembly according to claim 173, **characterized in that** the processor(s) is further configured to perform:
determining a target gear ratio of the assisted bicycle based on the slope of the environment in which the assisted bicycle is located.

178. The assistance assembly according to claim 177, **characterized in that** the processor(s) is further configured to perform:
based on the target gear ratio, outputting gear ratio adjustment prompt information to prompt the user to adjust the gear ratio of the assisted bicycle to the target gear ratio; or
adjusting the gear ratio of the assisted bicycle to the target gear ratio based on the target gear ratio.

179. The assistance assembly according to claim 173, **characterized in that** the processor(s) is further configured to perform:
in response to the user not riding on the assisted bicycle, determining the balancing torque based on the slope of the environment in which the assisted bicycle is located and the mass of the assisted bicycle.

180. The assistance assembly according to claim 174, **characterized in that** the controlling the assistance assembly to continuously output the assistance torque within the preset time period after the assisted bicycle maintains balance in response to a user operation comprises:
in response to the user pushing the assisted bicycle or triggering the push-bike mode control, controlling the assistance assembly to continuously output the assistance torque within the preset time period.

181. The assistance assembly according to claim 180, **characterized in that** the controlling the assistance assembly to continuously output the assistance torque within the preset time period comprises:
controlling the assistance assembly to continuously output the assistance torque within the preset time period based on the speed of the assisted bicycle.

182. The assistance assembly according to claim 181, **characterized in that** the controlling the assistance assembly to continuously output the assistance torque within the preset time period based on the speed of the assisted bicycle comprises:
in response to the speed not exceeding a push-bike speed threshold, controlling the assistance assembly to continuously output the assistance torque within the preset time period; and
in response to the speed exceeding the push-bike speed threshold, controlling the assistance assembly to stop outputting the assistance torque.

183. The assistance assembly according to claim 182, **characterized in that** when the speed does not exceed the push-bike speed threshold, the closer the speed is to the push-bike speed threshold, the smaller the assistance torque.

184. An assisted bicycle, **characterized in that** the assisted bicycle comprises an assistance assembly, a pedal assembly, a transmission assembly, and a wheel(s), both the assistance assembly and the pedal assembly are connected to the wheel(s) via the transmission assembly;
the assisted bicycle further comprises one or more processors and one or more memories storing computer program codes, wherein the one or more processors and the one or more memories storing computer program codes are configured to cooperate so that the assisted bicycle performs the following steps:
in response to a user pedaling the pedal assembly, controlling the assistance assembly to output an engagement torque to reduce or eliminate the transmission backlash; and
after the assistance assembly outputs the engagement torque, controlling the assistance assembly to output the assistance torque.

185. The assistance assembly according to claim 184, **characterized in that** the transmission assembly comprises a chainring, a chain, and a hub, and the transmission backlash comprises backlash between the chainring and the chain and/or backlash between the chainring and the hub.

186. The assistance assembly according to claim 184, **characterized in that** the assistance assembly comprises an assistance motor, the assistance motor being configured to provide the engagement torque, the processor(s) is further configured to perform:
determining whether the transmission backlash has been reduced or eliminated based on the rotational speed of the assistance motor, the rotational speed of the wheel, and the gear ratio of the assisted bicycle.

187. The assistance assembly according to claim 186, **characterized in that** the determining whether the transmission backlash has been reduced or eliminated based on the rotational speed of the assistance motor, the rotational speed of the wheel, and the gear ratio of the assisted bicycle comprises:
in response to a rotational speed of the assistance motor, a rotational speed of the wheel, and a gear ratio of the assisted bicycle satisfying a preset engagement condition, determining that the transmission backlash has been eliminated; and
in response to the rotational speed of the assistance motor, the rotational speed of the wheel, and the gear ratio of the assisted bicycle not satisfying the preset engagement condition, determining that the transmission backlash has not been eliminated.

188. The assistance assembly according to claim 184, **characterized in that** the engagement torque comprises a first engagement torque and a second engagement torque, the processor(s) is further configured to perform:
in response to the transmission assembly having the transmission backlash, controlling the assistance motor to output the first engagement torque to reduce or eliminate the transmission backlash; and
in response to the transmission backlash being reduced or eliminated, controlling the assistance motor to output the second engagement torque such that the transmission assembly maintains a current state, wherein
the first engagement torque is different from the second engagement torque.

189. The assistance assembly according to claim 188, **characterized in that** the first engagement torque is greater than the second engagement torque.
